# EUROPÄISCHE PATENTSCHRIFT

(11) **EP 1 929 370 B1**
(45) Veröffentlichungstag und Bekanntmachung des Hinweises auf die Patenterteilung: **05.06.2013**
(21) Anmeldenummer: 06791623.9
(22) Anmeldetag: 23.08.2006
(51) Int. Cl.: G03B 42/02, G03B 42/04

(54) **POSITIONIEREINRICHTUNG FÜR EINE SPEICHERFOLIE SOWIE SPEICHERFOLIEN-AUSLESEGERÄT, SPEICHERFOLIENKASSETTE UND SPEICHERFOLIEN-HANDHABUNGSEINRICHTUNG**
POSITIONING DEVICE FOR A STORAGE FILM AND STORAGE-FILM READER, STORAGE FILM CASSETTE AND STORAGE-FILM HANDLING DEVICE
DISPOSITIF DE POSITIONNEMENT POUR FILM SUPPORT DE RADIOGRAPHIE, ET APPAREIL DE LECTURE DE FILMS SUPPORTS DE RADIOGRAPHIE, CASSETTE DE FILMS SUPPORTS DE RADIOGRAPHIE ET DISPOSITIF DE MANIPULATION DE FILMS SUPPORTS DE RADIOGRAPHIE

(30) Priorität: 27.09.2005 DE 102005046314
(43) Veröffentlichungstag der Anmeldung: 11.06.2008
(73) Patentinhaber: Dürr Dental AG, 74321 Bietigheim-Bissingen (DE)
(72) Erfinder: NITSCHE, Klaus, 74366 Kirchheim/Neckar (DE); PRAGER, Ulrich, 74232 Abstatt/Happenbach (DE); THOMS, Michael, 74321 Bietigheim-Bissingen (DE)
(74) Vertreter: Ostertag, Reinhard
(86) Internationale Anmeldenummer: PCT/EP2006/008263
(87) Internationale Veröffentlichungsnummer: WO 2007/036271

(56) Entgegenhaltungen:
- EP-A- 1 321 804
- EP-A2- 0 919 857
- JP-A- 2000 235 239
- US-B1- 6 534 779

## Beschreibung

Die Erfindung betrifft eine Positioniereinrichtung mit einer Speicherfolie, eine Auslese-Folienaufspanneinrichtung mit einer solchen Positioniereinrichtung, eine Folienkassette mit einer solchen Positioniereinrichtung sowie eine Folien-Handhabungseinrichtung mit einer solchen Positioniereinrichtung zum Bewegen einer Speicherfolie zwischen einer solchen Folienkassette und einer solchen Auslese-Folien-aufspanneinrichtung.

Auf den verschiedenen Gebieten der Humanmedizin und der Veterinärmedizin, aber auch in der Materialprüfung finden zunehmend Speicherfolien anstelle herkömmlicher Röntgenfilme Verwendung. Diese Speicherfolien enthalten in einer dünnen lichtempfindlichen Schicht (Arbeitsschicht) verteilt Zentren, die bei Anregung mit Röntgenlicht in einen metastabilen angeregten Zustand mit längerer Lebensdauer übergehen.

Eine solche mit Durchstrahlungs-Röntgenlicht belichtete Folie enthält ein latentes Bild in Form einer lokal kleineren oder größeren Anzahl angeregter Speicherzentren eine ähnliche Information wie ein noch nicht entwickelter Röntgenfilm. Das Auslesen dieser Information erfolgt dadurch, daß man die belichtete Speicherfolie mit einem Laserstrahl geeigneter Wellenlänge (üblicherweise im Roten) scannt. Durch den Laserstrahl werden an dem jeweils getroffenen Punkt der Speicherfolie Speicherzentren, die sich in einem metastabilen angeregten Zustand befinden, in einen noch höheren Zustand erregt, aus dem sich dann unter Aussendung von Fluoreszenzlicht relaxieren. Dieses Fluoreszenzlicht wird mit einem Fotodetektor (in der Regel einem Fotomultiplier) gemessen.

Dadurch, daß man das Ausgangssignal des Fotodetektors in Abhängigkeit von der jeweiligen momentanen Position des zum Auslesen verwendeten Laserstrahles aufzeichnet, wird das latente Röntgenbild, das die angeregten Speicherzentren bildeten, in ein durch elektrische Signale ausgedrücktes Bild umgesetzt.

Im Hinblick auf eine ausreichende Absorption von Röntgenstrahlen muß die Dichte und Kernladungszahl von feinen Partikeln aus einem Phosphormaterial, welches die Speicherzentren enthält, ausreichend groß gewählt werden. Auch sollte die Konzentration der Phosphorpartikel hoch sein.

Befinden sich in der lichtempfindlichen Schicht zusätzliche Streuzentren in form von Inhomogenitäten oder mechanischen Beschädigungen, so wird die Signalwiedergabe bzw. Auflösung beim Auslesen des Röntgenbildes nachteilig beeinflußt. Man strebt daher an, daß die lichtempfindliche Schicht möglichst optisch isotrop ist.

Eine lichtempfindliche Schicht kann durch unsachgemäße Handhabung zusätzliche Streuzentren erhalten. Es sind dies insbesondere Kratzer oder Schleifspuren an der Oberfläche der lichtempfindlichen Schicht. Da Speicherfolien teuer sind, ist es wünschenswert, derartige Gebrauchsspuren zu vermeiden.

Die Druckschrift US 6,534,779 B1 beschreibt eine Vorrichtung und ein Verfahren zum Transportieren einer rechteckigen Speicherfolie entlang eines kompakten und daher gekrümmten Weges, um die Speicherfolie von einem ebenen Aufnahmebereich der Vorrichtung zu einem ebenen Auslesebereich und einem Löschbereich zu transportieren. Die Speicherfolien werden dabei an den Rändern auf beiden Seiten des Transportweges zwischen einer bogenförmigen Führungsschiene und beabstandeten Antriebsrollen gefördert. Um Beschädigungen der Speicherfolie zu vermeiden, sind sowohl an den seitlichen Rändern der Speicherfolie als auch an den Rändern quer zur Förderrichtung niedere Verstärkungsstreifen vorgesehen, an welchen die Antriebsrollen angreifen. Die Speicherfolien sind so von einem Schutzrahmen eingefasst.

Die vorliegende Erfindung beschäftigt sich generell mit dem Problem, wie man Speicherfolien so handhaben kann, daß mechanische Beschädigungen der lichtempfindlichen Schicht weitestgehend vermieden sind.

Diese Aufgabe ist erfindungsgemäß gelöst durch eine Speicherfolie-Positioniereinrichtung mit den im Anspruch 1 angegebenen Merkmalen.

Die Erfindung beschäftigt sich ferner damit, wie man in den Phasen der Aufnahme eines Röntgenbildes und den Phasen des Auslesens eines.Röntgenbildes die Bildung von Kratzern an der Folienoberfläche vermeidet. Hierzu gibt die Erfindung eine Folien-Auslesegerät mit einer solchen Positioniereinrichtung gemäß Anspruch 16 sowie eine Folien-Kassette mit einer solchen Positioniereinrichtung gemäß Anspruch 20 an.

Zur Vermeidung von Oberflächenbeschädigungen an einer Folie beim Überführen aus der Kassette in das Auslesegerät und umgekehrt gibt die Erfindung eine Folien-Transfereinrichtung mit einer solchen Positioniereinrichtung gemäß Anspruch 29 an.

Bei der erfindungsgemäßen Positioniereinrichtung sind zum einen auf der Speicherfolie selbst Führungsteile vorgesehen, die längs einer Führungslinie angeordnet sind. Diese Führungsteile sind so ausgebildet, daß sie die Biegbarkeit der Speicherfolie in einer zur Führungsrichtung geneigten, insbesondere senkrechten Richtung, nicht oder nur wenig beeinflussen.

Das Fixieren der flexiblen Speicherfolie in einer gewünschten Fläche (zum Auslesen bzw. zum Aufnehmen des Röntgenbildes) ist mindestens eine Führungsschiene vorgesehen, die verglichen mit der Speicherfolie hohe Steifigkeit aufweist. Sie prägt somit ihre Geometrie der Speicherfolie auf. Typische bevorzugte Geometrien für die Führungsschiene sind die geradlinige Geometrie und die kreisförmige Geometrie. Für Spezialanwendungen sind aber auch andere Geometrien durch entsprechende Formgebung der Führungsschiene leicht realisierbar.

Im Prinzip können die Führungsmittel, solange sie sich am Rande der Speicherfolie befinden, auf der Vorderseite oder der Rückseite der Speicherfolie vorgesehen sein. Sie können auch am Rand der Speicherfolie über der letzteren überstehend angeordnet sein.

Vorzugsweise befinden sich die Führungsmittel auf der nicht lichtempfindlichen Rückseite der Speicherfolie, wo sie auch an vom Rand entfernten Stellen angebracht werden können. Auf diese Weise erhält man unter Berücksichtigung der Eigensteifigkeit der Speicherfolie eine sehr gute Annäherung der Geometrie der lichtempfindlichen Schicht an eine gewünschte Sollfläche (insbesonder Ebene oder Zylinder), obwohl nur wenige Führungslinien vorgesehen sind (in der Praxis sind auch für die gängigen medizinischen Formate (bis hin zu 30 x 40 cm und mehr) zwei beabstandete Führungslinien ausreichend.

Nachstehend werden bevorzugte Ausführungsbeispiele der Erfindung unter Bezugnahme auf die Zeichnung näher erläutert. In dieser zeigen:
- Figur 1:: eine perspektivische Aufsicht auf die Rückseite einer Speicherfolie, die dort längs beabstandeter Führungslinien mit Reihen von beabstandeten Führungsschuhen versehen ist;
- Figur 2:: eine seitliche Ansicht der Speicherfolie nach Figur 1;
- Figur 3:: eine Frontansicht der Speicherfolie nach Figur 1(in vergößertem Maßstab);
- Figur 4:: eine perspektivische Ansicht einer Folienkassette, gesehen vom Beschickungsende derselben her, wobei eine Speicherfolie teilweise aus dem Inneren des Magazines herausgezogen wiedergegeben ist;
- Figur 5:: einen horizontalen Schnitt durch einen Kassetten-Aufnahmeschacht eines Speicherfolien-Auslesegerätes;
- Figur 6:: einen horizontalen Schnitt durch den Entnahmeabschnitt des in Figur 5 gezeigten Aufnahmeschachtes in umgekehrter Sichtrichtung, gezeigt ohne Kassette, wobei der Aufnahmeschacht durch einen Abdeckkörper verschlossen ist;
- Figur 7:: eine ähnliche Ansicht wie Figur 6, wobei jetzt eine Kassette in den Aufnahmeschacht eingeführt ist, welche den Abdeckkörper in eine Offenstellung bewegt hat und deren Verschlußklappe in eine Offenstellung bewegt worden ist;
- Figur 8:: eine ähnliche Ansicht wie Figur 7, in welcher ein Verschlußklappen-Betätigungsmechanismus in derjenigen Stellung gezeigt ist, die er kurz vor dem Ende des Einschubweges der Kassette einnimmt;
- Figur 9:: eine ähnliche Ansicht wie Figur 8, in welche jedoch die Kassette vollständig in ihre Endstellung bewegt ist;
- Figur 10:: eine ähnliche Ansicht wie Figur 9, wobei eine Speicherfolie in einer Stellung wiedergegeben ist, die sie in einer ersten Phase des Herausziehens aus der Kassette einnimmt;
- Figur 11:: eine seitliche Ansicht des Aufnahmeschachtes bei abgenommenem Schachtdeckel, in welcher die Mechanik zum Verstellen verschiedener Abdeckkörper in einer Stellung wiedergegeben ist, wie sie nach dem Einschieben einer mittelgroßen Kassette eingenommen werden;
- Figur 12:: eine ähnliche Ansicht wie Figur 11, wobei jedoch eine kleine Kassette in den Aufnahmeschacht eingeschoben ist;

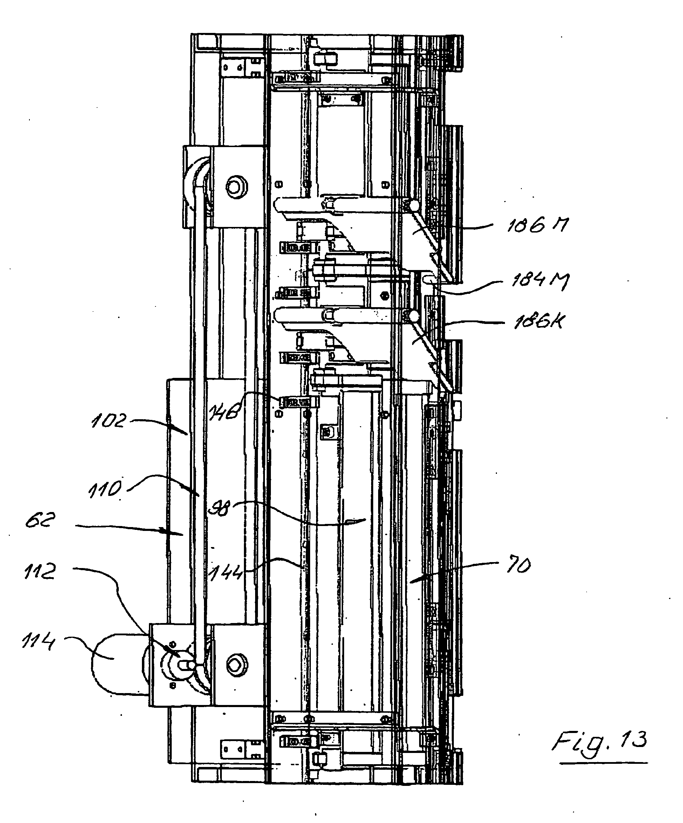

- Figur 13:: eine perspektivische Aufsicht auf die Mechanik des Kassetten-Aufnahmeschachtes gesehen von der Außenseite und der Lesekopfseite des Aufnahmeschachtes her;
- Figur 14:: eine perspektivische Ansicht eines Speicherfolien-Auslesegerätes, welches zwei Kassetten-Aufnahmeschächte hat;
- Figur 15:: eine vergrößerte Detailansicht des Auslaßbereiches von Aufnahmeschacht und Kassette sowie eines Foliengreifers, gezeigt unmittelbar nach der Verbindung von Foliengreifer und Speicherfolie;
- Figur 16:: eine ähnliche Ansicht wie Figur 15, wobei jedoch nun die Folie schon vollständig aus der Kassette herausbewegt ist;
- Figur 17:: eine Aufsicht auf das obere Ende des Auslesegerätes, wobei ein die Speicherfolie tragender Schlitten in einer obigen Endstellung wiedergegeben ist, in welcher die Speicherfolie unter Verwendung eines zweiten Greifers aus der Aufspanneinrichtung heraus und in eine leere Kassette hineinbewegt werden kann; und
- Figur 18:: eine ähnliche Ansicht wie Figur 1, wobei seitlich angeordnete Führungsmittel für die Folie gezeigt sind.

In den Figuren sind geschnitten Flächen nur ausnahmsweise schraffiert wiedergegeben. Es ist auch aus so dem Kontext ersichtlich, wo geschnittene Flächen liegen.

In der nachstehenden Beschreibung werden teilweise Lage- und Richtungsangaben wie "oben", "unten", "vorn", "hinten" verwendet. Diese beziehen sich, soweit nicht anders angegeben, auf die jeweils betrachtete Figur bzw. den jeweils betrachteten Förderschritt.

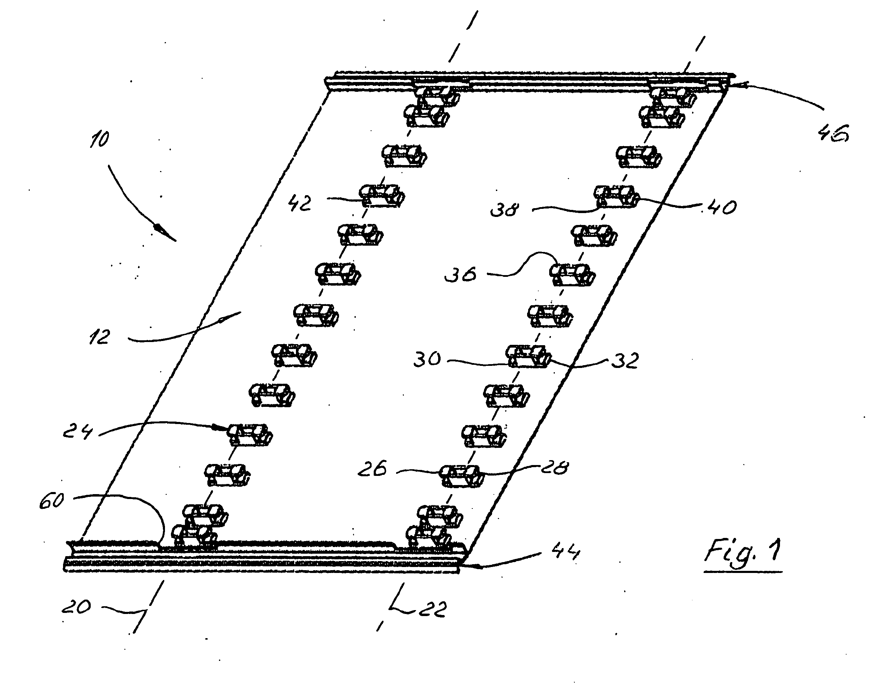

In den Figuren 1 bis 3 ist eine Speicherfolie insgesamt mit 10 bezeichnet. Sie umfaßt ein biegbares eigensteifes Substrat 12 mit einer typischen Dicke von 0,5 bis 0,8 mm sowie eine von letzterem getragene lichtempfindliche Arbeitsschicht 14 mit einer typischen Dicke von 0,1 bis 0,2 mm.

Die Arbeitsschicht 14 besteht aus einer transparenten Matrix 16 und in dieser dicht verteilten Phosporpartikeln 18, die z.B. aus einem Erdalkali- oder Alkalihalogenid-Mischkristallmateial mit einer Dotierung mit seltenen Erden wie Eu bestehen kann.

Bei einem Typ von Speicherfolien ist die gesamte Materialkombination von Matrix und Phosphorpartikeln der Arbeitsschicht 14 so gewählt, daß letztere weitgehend frei von inneren optischen Grenzflächen ist, die zu Streuungen von Licht führen könnten.

Bei einem anderen, konventionellen Typ von Speicherfolien enthält die Arbeitsschicht homogen verteilte innere Grenzflächen, mit der Konsequenz, daß die erzielte Auflösung hinter der an sich vom Laserstrahl her möglichen zurückbleibt.

Auf der Rückseite der Speicherfolie 10 sind längs zweier Führungslinien 20, 22 Führungsteile 24 angeordnet.

Diese sind im wesentlichen doppel-T-förmig ausgebildet mit zwei Führungsarmen 26, 28 am oberen Ende und zwei Befestigungsarmen 30, 32 am unteren Ende. Der mittlere Korpus des Führungsteiles 24 ist als hohles Kastenteil ausgebildet, welches nach oben offen ist und unten durch einen Boden verschlossen ist, dessen Unterseite mit der Unterseite der Befestigungsarme 30, 32 eine durchgehende Befestigungsfläche bildet.

Wie aus der Zeichnung ersichtlich, sind die beiden endständigen Führungsteile 24 unter einem Abstand vorgesehen, der die Hälfte des Abstandes zwischen inneren Führungsteilen 24 beträgt.

Die Führungsteile 24 sind mit ihren unteren Befestigungsflächen mit der Rückseite des Substrates so verklebt, daß ihre Führungsarme 26, 28 senkrecht auf den Führungslinien 20, 22 und parallel zur Folienebene verlaufen.

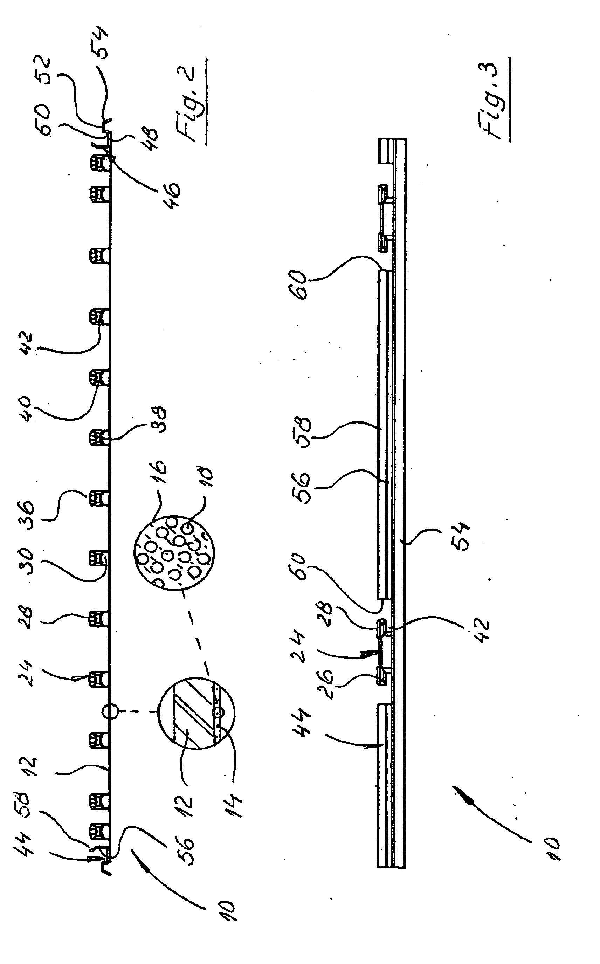

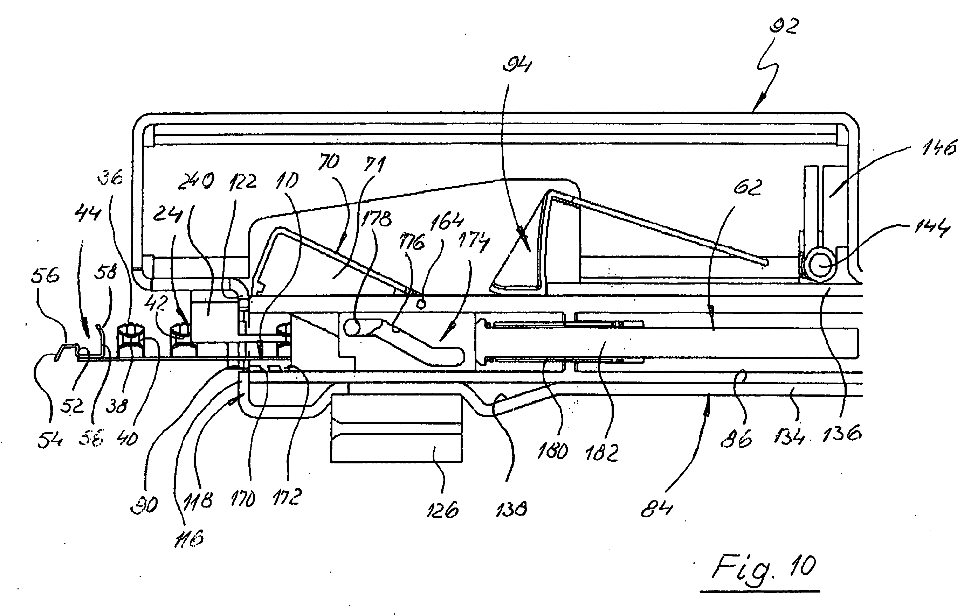

Wie aus den Figuren 2 und 3, insbesondere aber auch aus Figur 10 erkennbar ist, haben die Führungsarme 26, 28 jeweils eine konvexe Oberseite 36 und eine konvexe Unterseite 38, und die Oberseite 40 der Befestigungsarme 30, 32 ist ebenfalls konvex ausgebildet, so daß ein zwischen den Befestigungsarmen 30, 32 und den Führungsarmen26, 28 jeweils gebildeter Durchgang 42 sich zu beiden Enden hin erweitert.

Die Randkontur der Führungsarmenden ist senkrecht zur Folienebene gesehen abgerundet.

An seinen senkrecht auf den Führungslinien 20, 22 stehenden Endkanten trägt das Substrat 12 zwei Profilschienen 44, 46, die einerseits zur Versteifung der Folie dienen, andererseits eine kraftschlüssige Verbindung zu einem Greifer ermöglichen, wie nachstehend noch genauer beschrieben wird.

Wie insbesondere aus Figur 2 ersichtlich, haben die Profilschienen 44, 46 jeweils einen ebenen Bodenabschnitt 48, der mit der Rückseite des Substrates 12 verklebt ist. An den Bodenabschnitt 48 schließt sich nach außen ein geringfügig zur Senkrechten geneigter Schenkel 50 an, an dessen oberes Ende ein zur Rückseite des Substrates 12 paralleler Schenkel 52 angeformt ist. An diesem hängt ein wieder schräg geneigt zurücklaufender Schenkel 54, der als Greifer-Anlauframpe dient.

Vom rechten Ende des Bodenabschnittes 48 läuft im wesentlichen senkrecht nach oben ein Schenkel 56 weg, der zusammen mit einem in Figur 2 schräg nach links oben verlaufenden Schenkelendabschnitt 58 einen Anschlag für einen zum Bewegen der Speicherfolie dienenden Greifer dient, wie weiter unten noch genauer beschrieben wird.

Der Schenkel 56 mit seinem Schenkelendabschnitt 58 haben jeweils in der Fortsetzung der Führungsteile 24 Randausnehmungen 60, die sich fast bis zum unteren Ende des Schenkels 56 erstrecken. Durch eine Randausnehmung 60 kann jeweils eine mit den Führungsteilen 24 zusammenarbeitende Führungsschiene unter Spiel hindurchtreten, wie später noch genauer beschrieben wird.

Die Profilschienen 44, 46 sind gerollte Blechbiegeteile oder Extrusionsprofile. Typische.Materialien für das Substrat 12 sind biegbare Kunststoffe mit guter Häftung der Matrix 16. Typische Materialien für die Führungsteile 24, die ein Bewegen der Führungsteile 24 in passenden vorzugsweise metallischen Führungsschienen unter geringer Reibung gewährleisten, sind z.B. PA6 und PBT.

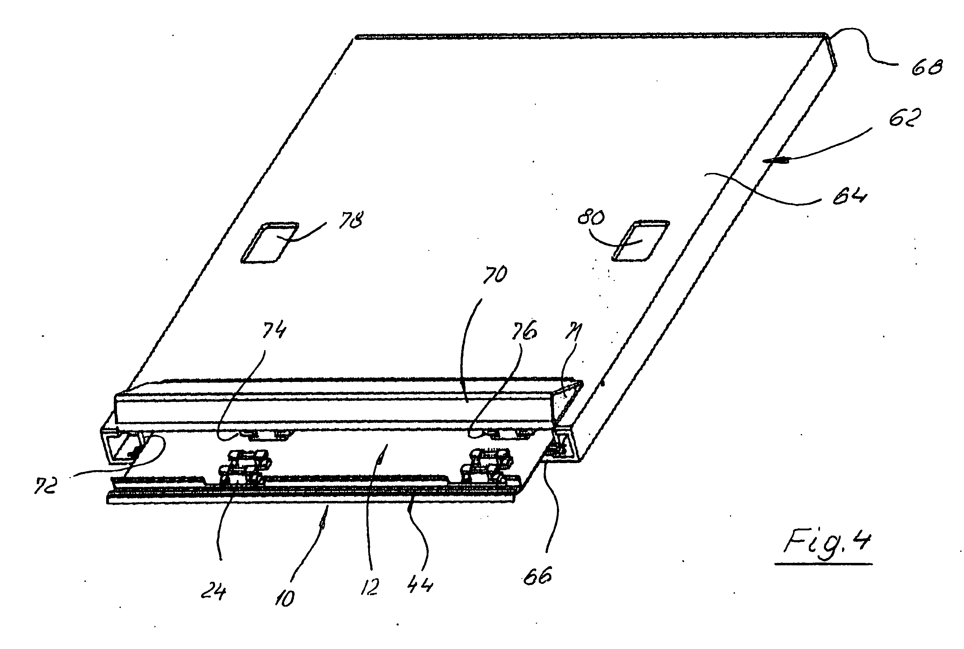

Figur 4 zeigt eine Kassette 62, in welcher eine Speicherfolie 10 Aufnahme finden kann. Die Kassette hat eine in Figur 4 obere Hauptwand 64, sowie eine dieser parallel gegenüberliegende untere Hauptwand 66. Diese bilden ein Hohlprofil mit dünnem rechteckigem Querschnitt, welches am hinteren Kassettenende durch einen Deckel 68 verschlossen ist.

Am dem Deckel 68 gegenüberliegenden, in Figur 4 unteren Beschickungsende ist die Kassette 62 durch eine Verschlußklappe 70 verschließbar, welche durch ein L-förmiges Profil gebildet ist, dessen langer Schenkel eine bündige Fortsetzung der oberen Hauptwand 64 darstellt und dessen kurzer Schenkel die vordere Schmalseite der Kassette 62 bildet, wenn die Verschlußklappe in einer Schließstellung steht. Das L-Profil ist an den Enden durch bündige Endwände 71 abgeschlossen.

In Figur 4 ist die Verschlußklappe 70 in einer Offenstellung wiedergegeben, in welcher eine Speicherfolie 10 über eine Kassetten-Beschickungsöffnung 72 in die Kassette hinein und aus dieser heraus bewegt werden kann.

Um zu verhindern, daß die empfindliche Arbeitsschicht 14 der Speicherfolie 10 in Berührung mit der Innenseite der unteren Hauptwand 66 kommt, sind auf der Unterseite der oberen Hauptwand 64, zwei Führungsschienen 74, 76 angebracht, die rechteckig C-förmigen Querschnitt aufweisen. Der Innenraum der Führungsschienen 74, 76 ist zum lichten Profil der Führungsarme 26, 28 komplementär, das Ganze derart, daß die oberen Enden der Führungsteile 24 unter engem Gleitspiel in den Führungsschienen 74, 76 bewegbar sind.

Die Höhe der Kassette 62 ist so bemessen, daß die Arbeitsschicht 14 der Speicherfolie 10 unter sicherem Abstand über der Oberseite der unteren Hauptwand 66 läuft.

In der Oberseite der oberen Hauptwand 64 sind zwei flache Vertiefungen 78, 80 vorgesehen, an denen ein dünnes Schubglied angreifen kann, um die Kassette in einem Kassetten-Aufnahmeschacht bewegen zu können, wie weiter unten noch genauer beschrieben wird.

Wie aus Figur 4 ersichtlich, ist die Kassette 62 breiter als die Speicherfolie 10, so daß noch Platz zum Unterbringen einer Mechanik verbleibt, die zum Bewegen der Verschlußklappe 70 zwischen der in der Zeichnung wiedergegebenen Offenstellung und einer in die lichte Kontur der Kassette 62 bündig eingefahrenen Stellung dient. Diese Mechanik wird später noch genauer beschrieben.

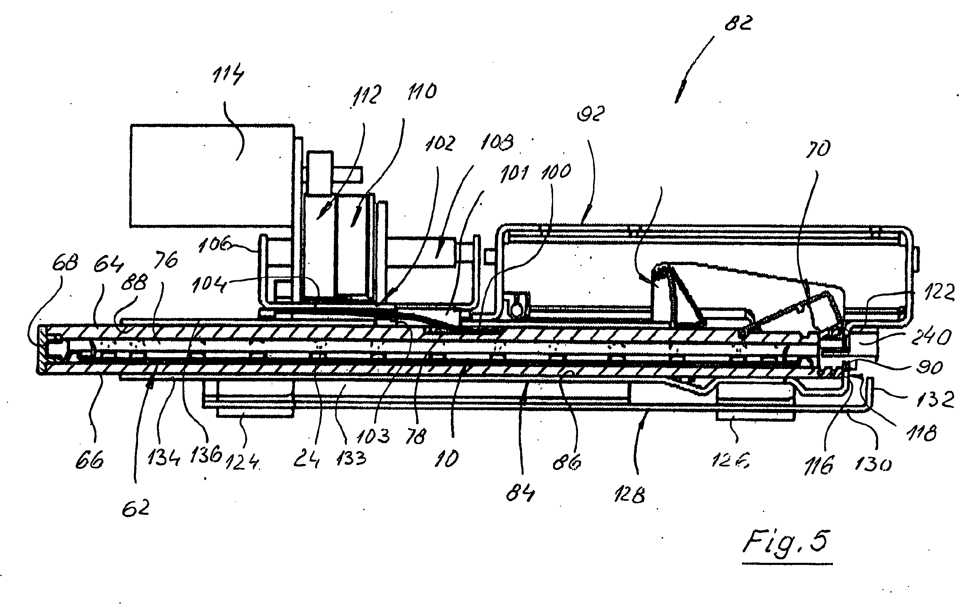

Um die Speicherfolie 10 aus der Kassette 62 ohne menschliches Zutun herausnehmen zu können und wieder in diese einführen zu können, kann man die in Figur 5 gezeigte, insgesamt mit 82 bezeichnete Transfereinheit zusammen mit einer später zu beschreibenden Greifereinheit verwenden.

Die Transfereinheit 82 hat einen aus Blechteilen gefertigten Kassetten-Aufnahmeschacht 84, dessen Innenflächen einen Kassetten-Aufnahmeraum 86 begrenzen. Letzterer ist am in Figur 5 links gelegenen Ende offen und bildet eine Kassetten-Beschickungsöffnung 88.

In dem gegenüberliegenden, in Figur 5 rechts gelegenen Ende des Kassetten-Aufnahmeschachtes 84 ist eine Folien-Beschickungsöffnung 90 ausgebildet.

Der Kassetten-Aufnahmeschacht 84 ist mit einem mehrfach abgewinkelten Hohlprofil 92 getragen, welches verschiedene mechanische Teile trägt, die dazu dienen, beim Einschieben einer Kassette 62 die Verschlußklappe 70 zu öffnen und ferner leistenförmige Abdeckkörper 94, 96, 98 aufzunehmen und zu lagern, die dazu dienen, den Kassetten-Aufnahmeraum lichtdicht abzuschließen, soweit dessen Querschnitt nicht durch eine Kassette 62 ausgefüllt ist.

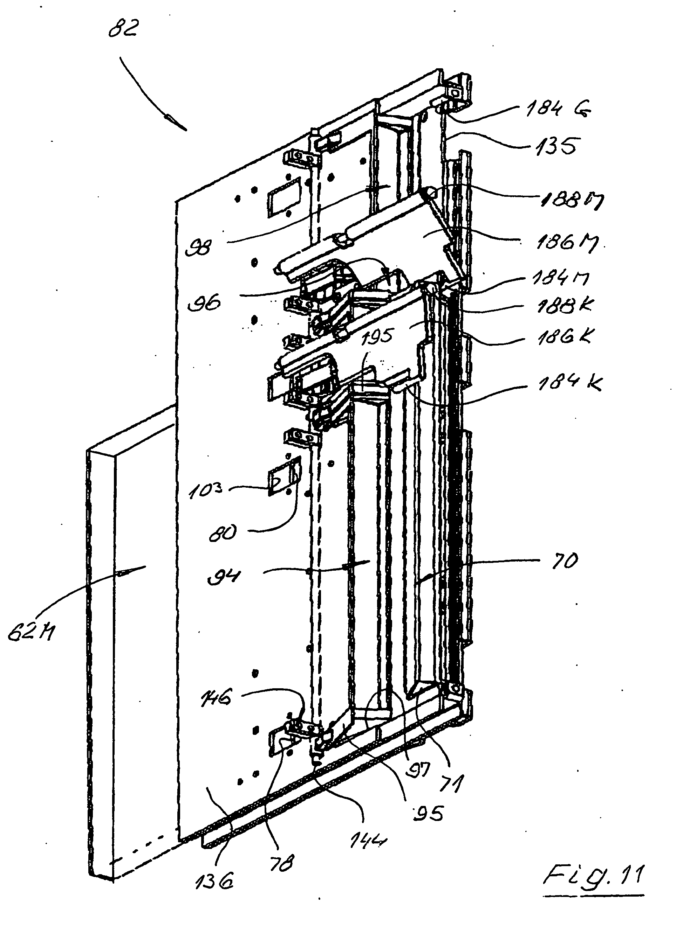

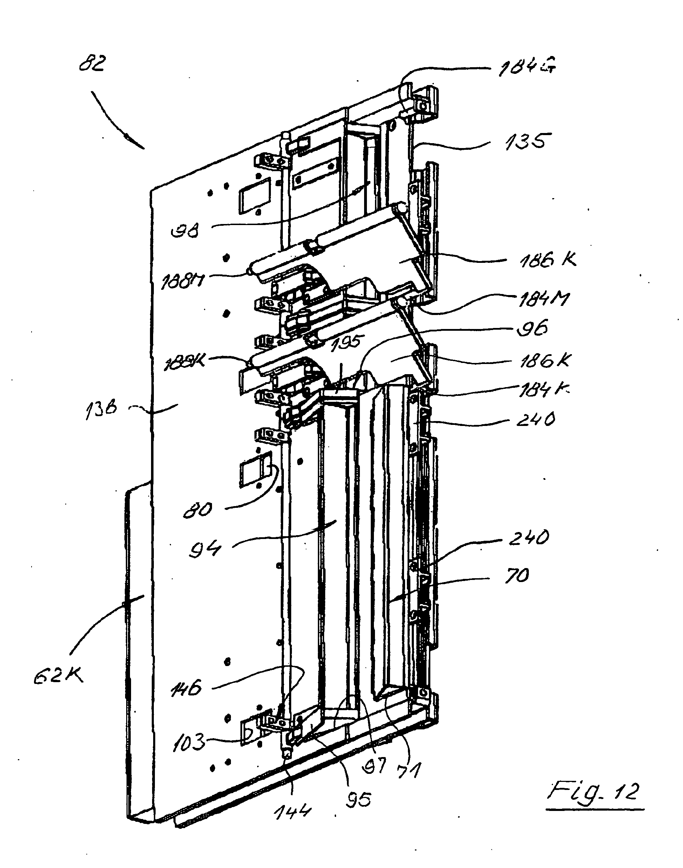

Die Abdeckkörper 94, 96, 98 haben, wie in Figuren 11 und 12 gezeigt, an einem (Abdeckkörper 96 ,98) oder zwei (Abdeckkörper 94) Enden Abdeckflansche 95 mit denen sie einen benachbarten Abdeckkörper oder einen Rand der Öffnung einer Schacht-Hauptwand 136 überdecken können, durch welche sie hindurchgeführt sind. So wird an diesen Stellen einer unerwünschter Lichteintritt verhindert.

Einzelheiten dieser Teile der Transfereinrichtung werden später noch genauer beschrieben.

In Figur 5 sind mit 100 senkrecht zur Zeichenebene mit Abstand hintereinander liegende flexible Antriebszungen bezeichnet, die aus einem blattfederähnlichen Material hergestellt sind, also eine gewisse Biegesteifigkeit mit Flexibilität verbinden. Diese Antriebszungen 100 haben nur geringe Dicke, so daß sie in die Vertiefungen 78, 30 in flächiger Anlage an den Vertiefungsboden einführbar sind und ihre Oberseite dann nicht über die Kassettenoberseite übersteht.

Geführt durch einen Schlitz in einem Führungsteil 101 können die Antriebszungen eine auf Schub belastbare Geometrie einnehmen, wobei ihr mit den Vertiefungen 78 bzw. 80 zusammenarbeitendes treibendes Ende gegenüber dem in Figur 5 linken getriebenen Ende in einer nach unten parallel versetze Ebene liegt.

Auf diese Weise können sie durch Fenster 103 in der oberen Wand des Kassetten-Aufnahmeschachts 84 hindurchgeführt werden.

Drei Antriebszungen 100 sind von einer abgewinkelten senkrecht zur Zeichenebene von Figur 5 verlaufenden Antriebsleiste 102 getragen, die einen in Figur 5 unteren zum Kassettenebene parallelen Winkel 104 und einen in Figur 5 vertikalen, senkrecht auf der Kassettenebene stehenden Schenkel 106 aufweisen. Der letztgenannte Schenkel ist über einen nur schematisch bei 108 gezeigten Gewindetrieb, einen Zahnriementrieb 110 und einen Ritzeltrieb 112 mit der Abtriebswelle eines Elektromotors 114 verbunden, der vom Rahmen der Transfereinheit 82 getragen ist.

Durch Erregen des Elektromotors 114 können somit die Antriebszungen 100 so bewegt werden, daß sie an der in Figur 5 rechts gelegenen Seitenwand der Vertiefungen 78, 80 angreifen, dann weiter nach rechts bewegt werden und so die Kassette in Figur 5 nach rechts bewegen, bis die Kassettenstirnwand an einer Gehäusestirnwand 118 des Kassettenaufnahmeschachtes 84 anstößt,

Die Gehäusestirnwand 118 ist gebildet durch einen hochgekanteten Endabschnitt 116 einer unteren Schacht-Hauptwand 134 zbd einen herabhängenden Endabschnitt 122 des Profilteiles 22.

Die einander gegenüberliegenden freien Kanten der Endabschnitte 116 und 122 begrenzen die Folien-Beschickungsöffnung 90 der Transfereinheit 82, die mit der der Beschikkungsöffnung der Kassette 62 fluchtet und durch welche eine Speicherfolie somit ebenfalls berührungsfrei hindurchgeführt werden kann, wenn sie in der durch die Führungsschienen 74, 76 vorgegebenen Ebene bewegt wird.

An der in Figur 5 unten liegenden Gehäusewand 134 des Kassetten-Aufnahmeschachtes 84 ist über Führungsblöcke 126, die jeweils einen an den Enden aufgekelchten Führungsschlitz aufweisen, ein gestreckter Anschlagbügel 128 angebracht, der einen langen zur Kassettenebene parallelen Schenkel 130 sowie mehrere beim in Figur 5 rechts gelegenen Ende des Aufnahmeschachtes liegende kurze senkrecht zur Zeichenebene beabstandete Schenkel 132 aufweist.

Der Anschlagbügel 128 ist über vertikale Schenkel 133 der Antriebsleiste 102 mit dieser zur synchronen Bewegung verbunden.

Sind die Antriebszungen 100 voll ausgefahren stehen die Schenkel 132 recht der Gehäusewand 118. Sind die Antriebszungen 100 voll zurückgefahren (diese Stellung wird von einer Steuerung für den Elektromotor 114 herbeigeführt, wenn eine Kassette eingesetzt oder entnommen werden soll), so sind die Anschläge bildenden Schenkel 132 in Randausnehmungen 135 der Hauptwand 134 des Aufnahmeschachtes 84 eingefahren, die in den Figur 11 und 12 sichtbar sind.

Sie geben dann einen vor der Gehäusewand 118 liegenden Anschlag für eine Kassette 62 vor, welcher die Kassette an einem Punkt zwangsweise zum Halten bringt, an dem ein später noch zu beschreibender wegabhägig arbeitender Mechanismus zum Öffnen der Verschlußlappe 70 noch nicht zu arbeiten begonnen hat.

Das Öffnen der Verschlußklappe 70 kann somit nur durch eine Steuerung eingeleitet werden, in dem diese über eine entsprechende Ansteuerung des Elektromotors 114 den Anschlagbügel 128 beim Vorschieben der Antriebszungen 100 synchron hierzu in eine rechts der Gehäusewand 118 liegende nicht aktive Stellung bewegt. So ist die Gefahr eines manuell versehentlich verursachten Falschlichteintrittes in die Kassette 62 vermieden.

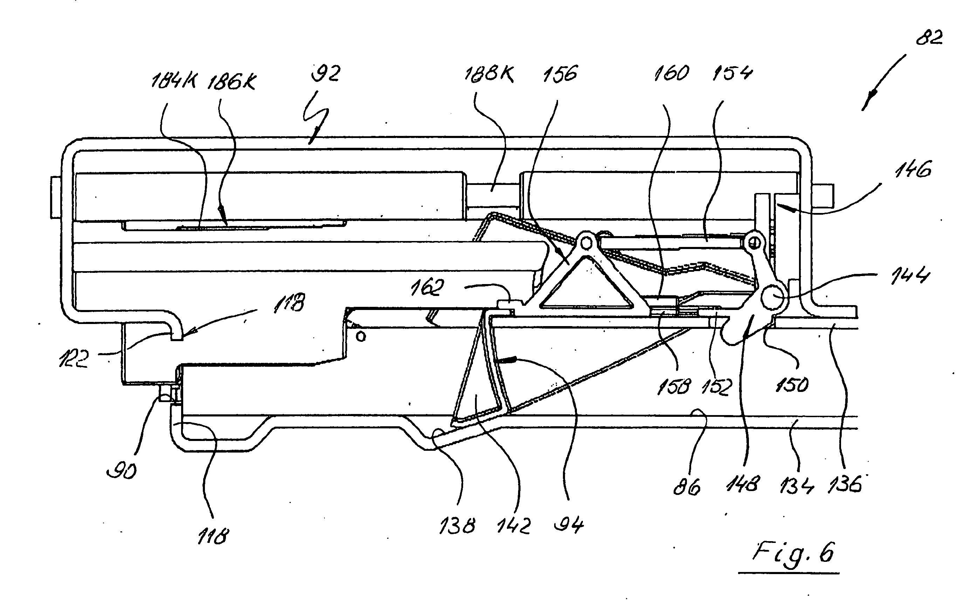

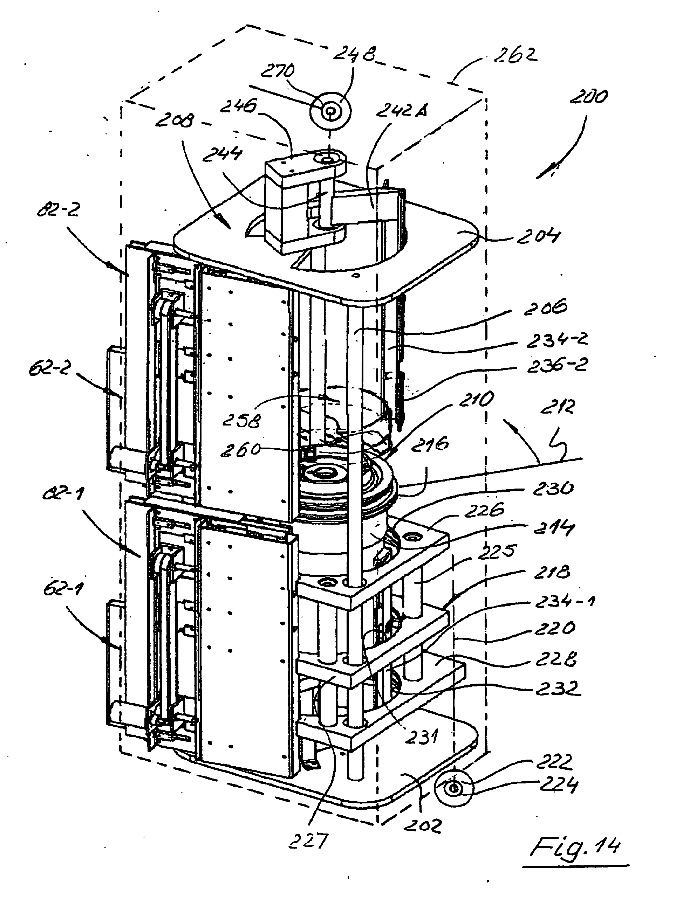

Die Figuren 6 bis 10 zeigen ebenfalls senkrecht zur Kassettenebene gelegene Schnitte durch einen Teil der Transfereinrichtung nach Figur 5, wobei die Blickrichtung aber vertauscht ist (bei Bezugnahme auf Figur 14: Vertauschung von "nach oben" und "nach unten").

In Figur 6 ist das der Folienbeschickungsöffnung 90 benachbarte Ende der Transfereinheit 82 gezeigt. Man erkennt deutlicher die Gehäusestirnwand 118, in welcher die Folienbeschickungsöffnung 90 vorgesehen ist.

Die beiden Hauptwände des Kassettenaufnahmeschachtes 84 sind mit 134 und 136 bezeichnet.

In der in Figur 6 unteren Hauptwand 134 ist eine Vertiefung 138 ausgebildet, die den Querschnitt eines stumpfwinkligen nicht gleichschenkligen Dreiecks aufweist.

In die Vertiefung 138 ist dann, wenn der Kassettenaufnahmeraum 86 leer ist, wie in Figur 6 dargestellt, das untere Ende des Abdeckkörpers 94 eingefahren. Dieser hat die Gestalt einer Z-förmigen Profilschiene, welche an ihren Enden durch Hebel 142 getragen sind, die auf einer Achse 144 gelagert sind, die über insgesamt mit 146 bezeichnete Klemmblöcke rahmenfest gelagert ist.

Die in Figur 5 obere Hauptwand 136 endet hinter der Rückseite des bogenförmigen hinteren Abschnittes der Leiste des Abdeckkörpers 94, so daß der Abdeckkörper 94 auch mit seinem unteren Schenkel so angehoben werden kann, daß dessen Unterseite eine glatte Fortsetzung der Unterseite der Hauptwand 136 darstellt. Dieses Anheben des Abdeckkörpers 94 erfolgt durch Zusammenarbeiten der Vorderseite einer von rechts eingeschobenen Kassette mit den schräg abfallenden Kanten der Hebel 142.

Bevor die Kassettenvorderseite mit den Hebeln 142 in Eingriff kommt, betätigt sie noch einen Stellhebel 148, der ebenfalls auf der Achse 144 gelagert ist. Der Stellhebel 148 ragt durch eine Öffnung 150 in der oberen Hauptwand 136 in den Kassettenaufnahmeraum 84 und in die Bahn der Kassette. Um bei leerer Kassettenaufnahme die Öffnung 150 zu verschließen, ist an den Stellhebel 148 eine entsprechende Abdeckplatte 152 angeformt.

Der Stellhebel 148 ist ein zweiarmiger Hebel und arbeitet über einen gelenkig verbundenen Lenker 154 auf einen insgesamt mit 156 bezeichneten Riegel, der mit seitlichen Führungsrippen in Führungsnuten 158 einer gehäusefesten Riegelführung 160 zusammenarbeitet.

Der Riegel 156 ist als dreieckiges Fachwerk ausgebildet und hat an seinem in Figur 6 links gelegenen Ende einen gekröpften Riegelabschnitt 162, der den oberen in Figur 6 horizontalen Schenkel der Leiste des Abdeckkörpers 94 übergreifen kann. Auf diese Weise ist der Abdeckkörper 94 in seiner Schließstellung verriegelt, solange sich bei ihm kein Abschnitt einer Kassette findet.

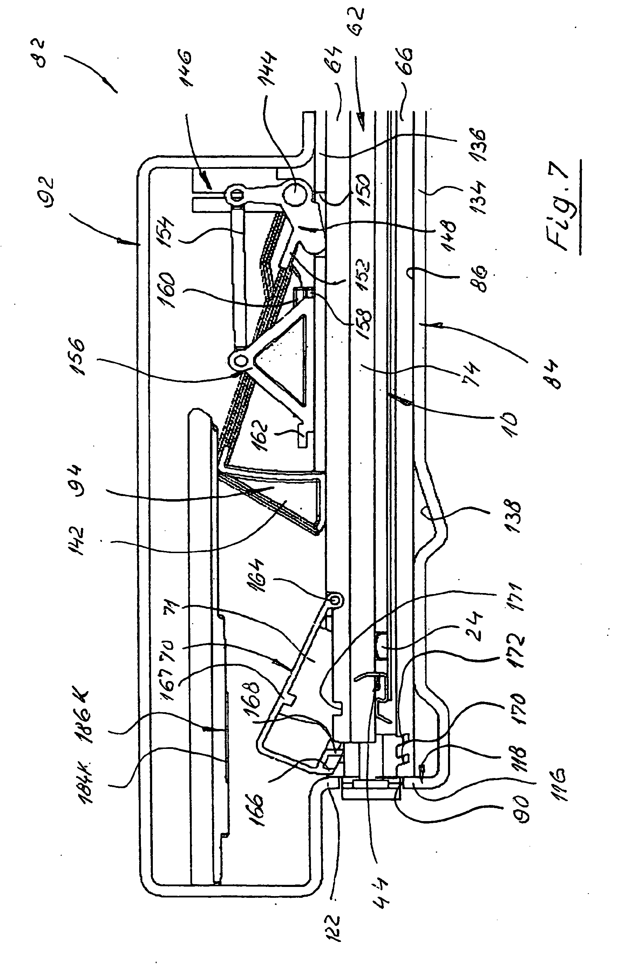

Figur 7 zeigt den gleichen Schnitt der Transfereinheit 82 zu einem Zeitpunkt, zu dem eine Kassette 82 voll in den Kassettenaufnahmeraum 86 eingeführt ist, so daß ihre linke Stirnfläche an der Gehäusewand 118 anschlägt. Bei dieser Bewegung wurde zunächst durch Nachaußendrehen des Stellhebels 148 der Abdeckkörper 94 freigegeben, dann wurde der Letztere durch Zusammenarbeiten der unteren Kante des Hebels 142 mit der Vorderseite der Kassette 82 nach oben bewegt, bis er die in die in Figur 7. dargestellte Offenstellung erreicht hat, in welcher der untere Schenkel der Profilleiste eine Fortsetzung der oberen Hauptwand 136 darstellt.

In Figur 7 ist ferner schematisch noch eine Speicherfolie 10 mit ihrer linken Profilschiene 44 und einem der Führungsteile 24 gezeigt.

Um am Beschickungsende der Kassette 62 eine gute Abdichtung gegen Umgebungslicht zu erhalten, trägt die Unterseite der Verschlußklappe 70 zwei zur Schwenkachse 164 der Verschlußklappe konzentrische Dichtrippen 166, 168, die mit komplementären ebenfalls zur Schwenkachse 164 konzentrischen bzw. tangentialen Dichtnuten 170, 172 zusammenarbeiten, die in der unteren Hauptwand 66 der Kassette 62 ausgebildet sind.

Eine weitere Dichtrippe 167 kann auf der Unterseite der Verschlußklappe 70 vorgesehen sein und mit einer Dichtnut 171 in der Oberseite der Kassetten-Hauptwand 64 zusammenarbeiten, um eine optische Labyrinthdichtgung zu bilden.

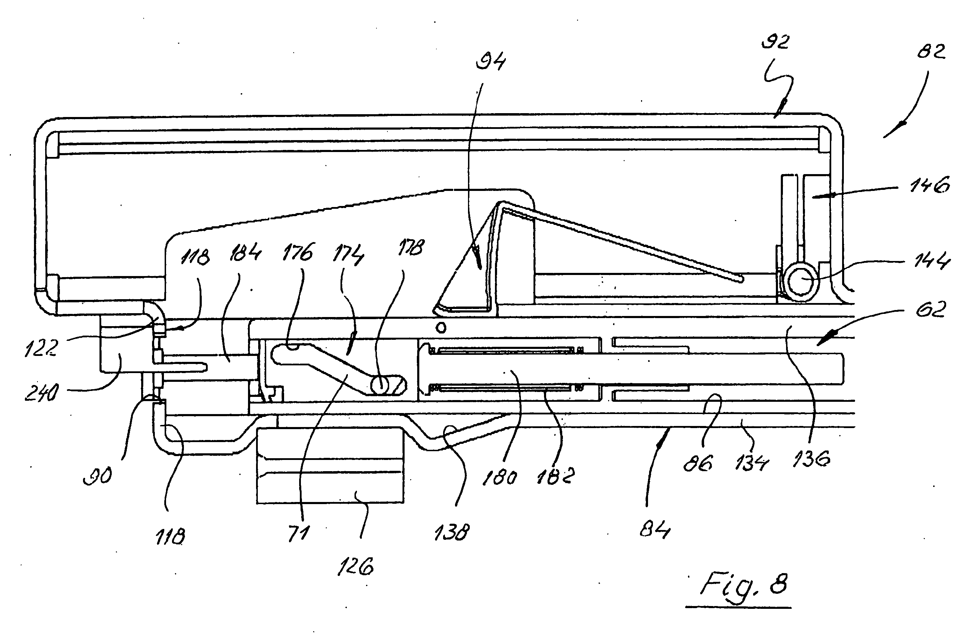

Nunmehr wird unter Bezugnahme auf Figur 8 der Mechanismus zum zwangsweisen Öffnen der Verschlußklappe 70 in der letzten Phase der Einschiebbewegung beschrieben.

Nahe bei der einen Seite der Kassette 82 ist in dieser ein Steuerkörper 174 verschiebbar gelagert, der mit einer abfallenden Steuernut 176 versehen ist. Diese arbeitet mit einem Folgestift 178 zusammen, der von einer der Seitenwände 71 der Verschlußklappe 70 getragen ist.

Der Steuerkörper 174 ist in Figur 8 nach links durch eine Feder 180 vorgespannt, die auf einen im Kassettengehäuse gelagerter Stößel 182 arbeitet.

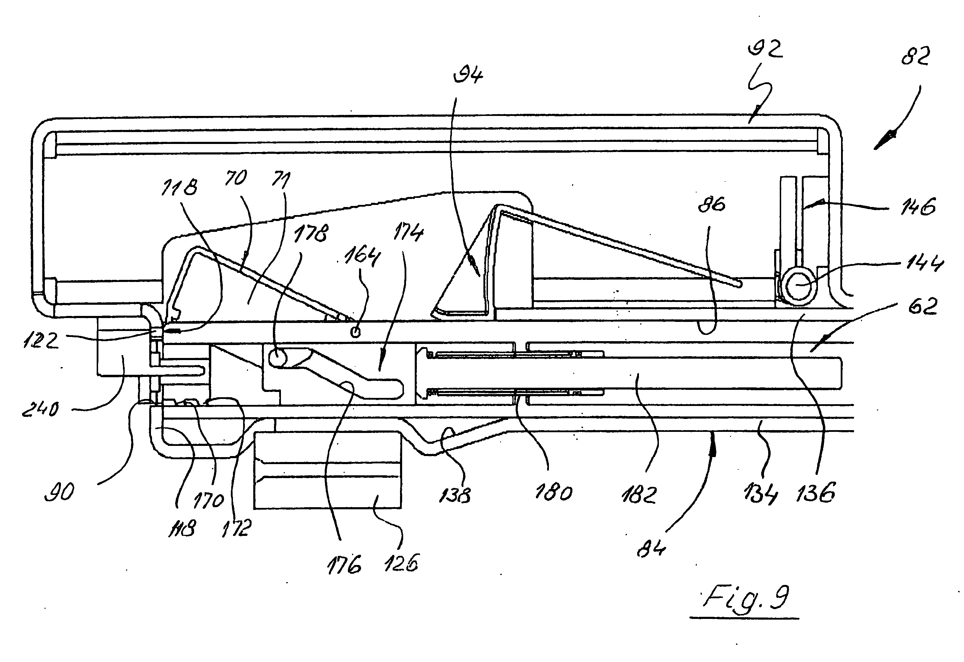

Wird der Steuerkörper 174 entgegen der Kraft der Feder 180 in Figur 8 nach rechts bewegt, so wird der Folgestift 178 angehoben, wodurch die Verschlußklappe 70 in Figur 8 im Uhrzeigersinne verschwenkt wird. Die entsprechende Stellung der Antriebsmechanik ist in Figur 9 gezeigt.

Das Bewegen des Steuerkörpers 174 von der in Figur 8 gezeigten Stellung in die in Figur 9 gezeigte Stellung erfolgt durch einen in Bewegungsrichtung feststehenden Betätigungsstift 184, der Teil der Transfereinheit 82 ist.

Wie aus den Figuren 11 und 12 ersichtlich ist, kann ein Betätigungsstift für eine größte Kassette einfach am Rahmen der Transfereinheit abgestützt sein, wie bei 184G dargestellt.

Ein Anschlagstift 184M für eine mittelgroße Kassette ist von einem Stützflügel 186M getragen, der auf einer rahmenfesten Achse 188M verschwenkbar gelagert ist.

Die Lage der Achse 188M und die radiale Abmessung des Stützflügels 186M sind so gewählt, daß der Stützflügel 186M dann, wenn bei ihm keine Kassette steht, schräg nach unten verläuft, wie in Figur 11 wiedergegeben.

Ein weiterer Betätigungsstift 184K ist auf ähnliche Weise über einen Stützflügel 186K auf einer Achse 188K verschwenkbar angeordnet. Die obigen Ausführungen gelten sinngemäß.

Die Stützflügel 186M und 186K werden jeweils aus der schräg abfallenden Stellung, in welcher ihr Betätigungsstift 184 in die Bahn der Kassette ragt, in eine angehobene Stellung verschwenkt, in welcher der Betätigungsstift !842 über der Bahn der Kassette liegt, angehoben, wenn eine Kassette eingeschoben wird und die in ihrer Bahn befindlichen Abeckkörper 94 bzw. 94 und 96 anhebt.

In Figur 11 ist eine Lage der Betätigungsstifte und Stützflügel gezeigt, wie sie beim Einschieben einer mittelgroßen Kassette 62M erhalten wird: Der Stützflügel 186K und der Betätigungsstift 184K sind angehoben, der Stützflügel 186M und der von ihm getragene Betätigungsstift 184M ragen noch in die Bahn der Kassette 62M und haben bei deren Vorschieben die Verschlußklappe 70 ausgeschwenkt.

Wird eine kleinere Breite aufweisende Kassette 62K eingeschoben, so hat man die in Figur 12 gezeigten Verhältnisse. Nun steht auch der Stützflügel 186K mit seinem Betätigungsstift 184K in der unteren Arbeitsstellung, und der Betätigungsstift 184K hat die Verschlußklappe 70 der kleineren Kassette 82 geöffnet.

Wird eine große Abmessung.aufweisende Kassette verwendet, so werden die Stützflügel 186K und 186M beide angehoben, so daß beide Betätigungsstifte 184K und 184M außer Funktion bleiben. Das Öffnen der großen Kassette erfolgt dann unter Verwendung des feststehenden Betätigungsstiftes 184G.

In Figur 14 ist ein Scanner zum Auslesen von belichteten Speicherfolien insgesamt mit 200 bezeichnet. Er hat einen aus zwei Endplatten 202, 204 und diese verbindenden Stäben 206 gebildeten Rahmen 208.

Dieser trägt fluchtend übereinanderliegend zwei Tranfereinheiten 82-1 und 82-2, wie sie vorstehend beschrieben wurden. Soweit nachstehend Komponenten dieser Einheiten zu unterscheiden sind, erfolgt dies gleichermassen durch Anhängen von "-1" bzw. "-2".

Von der unteren Endplatte 202 ist ein insgesamt mit 210 bezeichneter Lesekopf getragen, der gleichen Aufbau aufweisen kann, wie in der WO 01/18796 A1 beschrieben. Deren Inhalt soll durch Bezugnahme auch Inhalt der vorliegenden Anmeldung sein.

Der Lesekopf 210 erzeugt mit eines umlaufenden Spiegels einen umlaufenden Laserstrahl 212, mit dem die angeregten Zentren der Arbeitsschicht 14 einer Speicherfolie 10 zur Abgabe von Fluoreszenzlicht angeregt werden können. Das so erhaltene Fluoreszenzlicht wird mit einem großen Durchmesser aufweisenden Fotomultiplier detektiert, der im Inneren des Lesekopfes 210 angeordnet ist und hier nicht näher gezeigt ist.

Der Lesekopf 210 hat ein mit 214 bezeichnetes zylindrisches Gehäuse, welches einen Ringspalt 216 aufweist, durch welchen der Laserstrahl 212 austritt.

Um eine Speicherfolie in zylindrisch gekrümmter Geometrie über den Ringspalt 216 hinwegbewegen zu können, ist ein insgesamt mit 218 bezeichneter Aufspannschlitten vorgesehen. Dieser ist auf den Stäben 206 verschiebbar und mittels einer Gewindespindel 220, auf welche ein Motor 222 arbeitet, in in Figur 14 vertikaler Richtung verstellbar.

Der Motor 222 arbeitet mit einem Stellungsgeber 224 zusammen. Im Inneren des Lesekopfes 210 ist ein mit dem Umlenkspiegel zusammenarbeitender Winkelgeber vorgesehen, so daß man aus den Ausgangssignalen dieses Winkelgebers und des Stellungsgebers 224 den jeweils abgetasteten Punkt der Speicherfolie bestimmen kann.

Durch Aufzeichnen des Ausgangssignales des Fotomultipliers und der Ausgangssignale von Winkelgeber und Stellungsgeber 224 kann man in einer angeschlossenen Auswerteeinheit eine elektronische Kopie des latenten Röntgenbildes erhalten, welches durch Durchstrahlen eines Objektes mit Röntgenstrahlen auf der Speicherplatte 10 erhalten wurde.

Um die Speicherfolie 10 in exakt zylindrische Form bringen zu können, haben beabstandete durch Stäbe 225 verbundene Platten 226, 227, 228 des Aufspannschlittens 218 jeweils eine innenliegende kreisförmige Führungsschiene 230, 231 bzw. 232, deren Profil demjenigen der Führungsschienen 74, 76 exakt entspricht, so daß in ihnen die Führungsteile 24 der Speicherfolie 10 gleichermaßen in engem Gleitspiel gehalten sind.

Zum Bewegen der Speicherfolien 10 aus den Kassetten 62 in die Führungsschienen 230, 231, 232 des Aufspannschlittens 218 arbeitet mit den Transfereinheiten 82 jeweils eine insgesamt mit 234 bezeichnete Transferleiste zusammen.

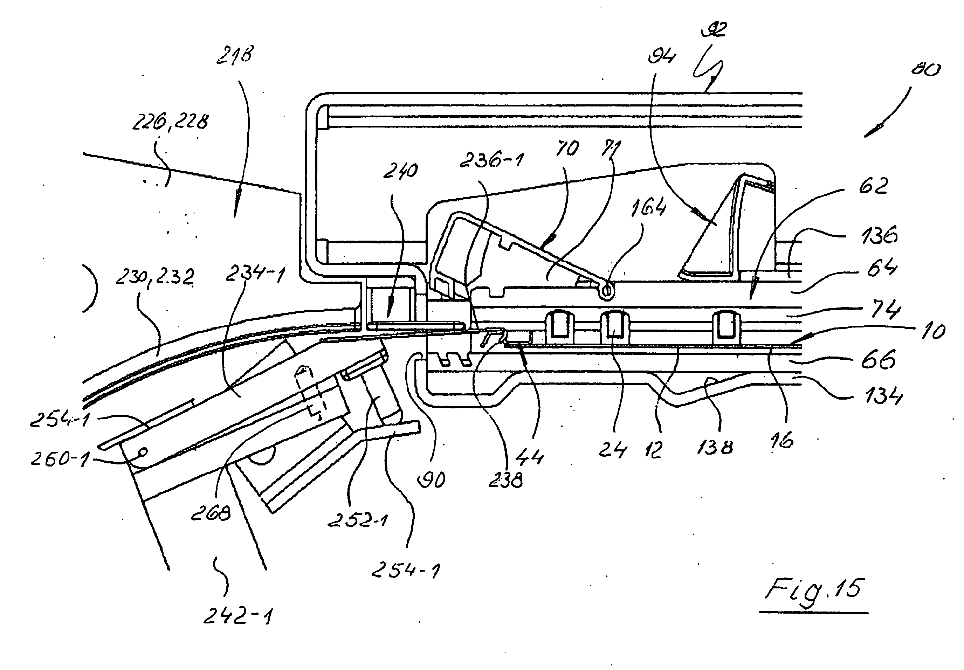

Diese trägt an ihrem in Figur 14 im Uhrzeigersinne vorne liegenden Ende mehrere Greifleisten 236, die aus blattfederähnlichem Material hergestellt sind und beim freien Rand einen Hakenabschnitt 238 aufweisen. Dieser kann, wie aus Figur 15 ersichtlich, bei Annäherung an die Profilleiste 44 einer Speicherfolie 10 auf dem Schenkel 54 der Profilleiste nach oben und über den Schenkel 52 der Profilleiste hinweg fahren und in die Nut der Profilleiste eingreifen und ggf. in ein im Schenkel 52 ausgebildetes Fenster einfahren.

Bewegt man nun die Greifleiste 236 aus der Kassette 62 heraus, so wird die Speicherfolie 10 in den Führungsschienen 74, 76 geführt herausgezogen. Nach einer kurzen Wegstrecke treten dann die Führungsteile 24 in fluchtende Führungs-Übergangsstücke 240 ein, die vom Rahmen der Transfereinheit 82 getragen sind.

Die Übergangsstücke 240 haben wiederum gleiches Profil wie die Führungsschienen 74, 76 einerseits und die Führungsschienen 230, 231, 232 andererseits. Das in Figur 15 links gelegene Ende der Übergangsstücke 140 endet jeweils unter kleinem Abstand fluchtend vor dem gegenüberliegenden Ende der zugeordneten gekrümmten Führungsschiene 230, 231 bzw. 232.

Die Führungs-Übergangsstücke 240 haben an ihren kassettenseitigen Enden verminderte Höhe (Basis des C ist entfernt), so daß man dort nur zwei dünne Führungsstege hat, die den Flanschen der C-Schiene entsprechen und wie die Zinken einer Gabel vom in der Zeichnung links gelegenen volles C-förmiges Profil aufweisenden Abschnitt der Übergangsstücke 240 vorstehen.

Die Transferleiste 234 ist von einem Antriebsarm 242 getragen, der von einer auf der Achse des Lesekopfes 210 angeordneten Welle 244 getragen ist, die in einem rahmenfesten Bügel 246 gelagert ist, wie in Figur 14 für die obere Transfereinheit 82-2 gut erkenntlich. Die Transferleiste 234-1 für die untere Transfereinheit 82-1 ist am unteren Ende auf ähnliche Weise gelagert, was aber aus der Zeichnung nicht gut ersichtlich ist.

Zum Drehen der Welle 244 ist ein Antriebsmotor 248 vorgesehen, der in Figur 14 nur schematisch angedeutet ist.

Wie aus Figur 15 ohne weiteres ersichtlich, muß die Greifleiste 236 unterschiedliche Bewegungen ausführen:

Solange die Führungsteile 24 der Speicherfolie 10 noch nicht mit den gekrümmten Führungsschienen 230, 231, 232 des Aufspannschlittens 218 zusammenarbeiten, soll die Bewegung der Greifleiste 236 exakt parallel zu der durch die Führungsschienen 74, 76 vorgegebenen Richtung verlaufen.

Sowie die ersten Führungsteile 24 in die gekrümmten Führungsschienen 230, 231, 232 hineingelaufen sind, soll die Greifleiste 136 dagegen eine Kreisbewegung ausführen.

Außerdem muß die Greifleiste 236 aus dem Eingriff mit der Profilschiene 44 wieder herausbewegbar sein, damit sie vom vertikal zu verfahrenden Aufspannschlitten 218 freikommt.

Um dies zu ermöglichen, ist die Transferleiste 234 am äußeren Ende des Antriebsarmes 142 durch einen Stift 250 gelenkig gelagert. Durch eine in der Zeichnung nicht wiedergegebene Feder ist die Transferleiste 234 im Uhrzeigersinne vorgespannt. Diese Vorspannung wird dann, wenn die Speicherfolie 24 mit mindestens einem Satz von Führungsteilen 24 in den Führungsschienen 230, 231, 232 läuft, durch die Führungsteile 24 und die Führungsschienen 230, 231, 232 aufgenommen.

Befindet sich keines der Führungsteile 24 im Eingriff mit den Führungsschienen 230, 231, 232, so wird die Transferleiste 234 in der Nachbarschaft der Endwand 118 des aufnahmeschachtes 84 über einen von ihr getragenen Folgestift 252 an einer Nockenfläche 254 abgestützt, die vom Rahmen des Scanners 200 getragen ist.

Die Nockenfläche 254 ist als ebene Fläche gezeigt; es könnte sich aber hierbei auch um eine geeignet gekrümmte Fläche handeln. Die Kontur der Nockenfläche 254 ist generell so gewählt, daß man durch Überlagerung der durch den Antriebsarm 242 bereitgestellten Kreisbewegung des Schwenkpunktes der Transferleiste 234 und der durch die Nockenfläche 254 gesteuerten Bewegung des vorderen Endes der Greifleiste 236 insgesamt eine lineare Bewegung der Hakenabschnitte 238 in der Bewegungsebene der Profilschiene 44 erhält, wenn die Speicherfolie 10 durch die Führungsschienen 74, 76 der Kassette 62 geführt ist.

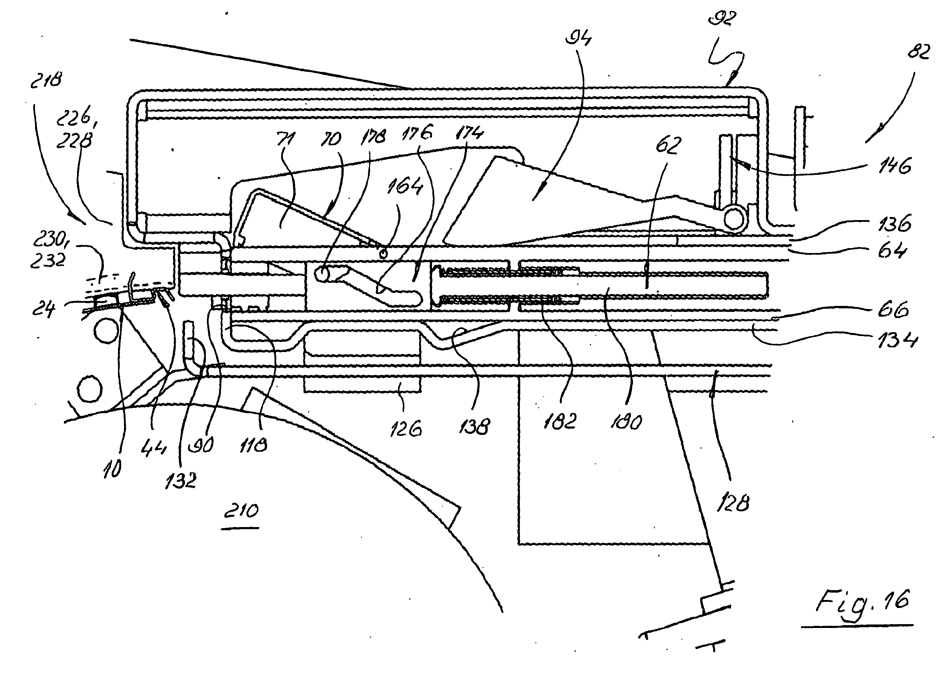

Durch Bewegen der Transferleiste 234 um einen ausreichend großen Winkel erreicht man dann einen Zustand, in welchem das vordere Ende der Speicherfolie 10 beim hinteren Ende der Führungsschienen 230, 231, 232 liegt, während das hintere Ende der Speicherfolie 10 mit seiner Profilschiene 46 beim vorderen Ende der Führungsschienen 230, 231, 232 liegt, wie in Figur 16 dargestellt.

In dieser Stellung der Speicherfolie 10 ist sie gemäß der Krümmung der Führungsschienen 230, 231, 232 exakt zylindrisch gebogen und kann unter kleinem radialem Abstand über den Ringspalt 216 bewegt werden und dabei durch den Laserstrahl 212 ausgelesen werden.

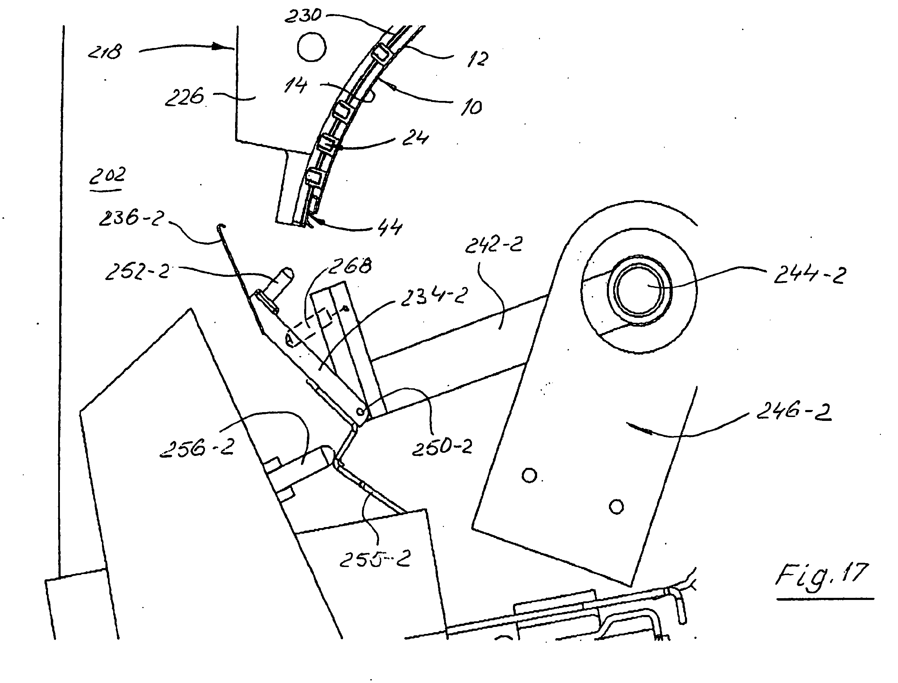

Figur 17 zeigt dieselbe Situation beim anderen Ende der FÜhrungschienen 230, 231, 232. Die Transferleiste 234 ist in einer Stellung gezeigt, in der sie sich von der Profilschiene ausgeklinkt hat.

Hierzu trägt die Transferleiste 234 ein Z-förmiges Nockenblech 254, welches mit einem rahmenfesten Folgestift 256 so zusammenarbeitet, daß die Greifleiste 236 radial nach außen verschwenkt wird, wenn sie das in Figur 17 gezeigt hintere Ende der Führungsschienen 230, 231, 232 erreicht.

Das Nockenblech 254 ist zu den Führungsschienen 230, 231, 232 ausreichend axial versetzt, so daß es diese beim Verschwenken der Transferleiste 234 nicht berührt.

In der in Figur 17 gezeigten Stellung der Transferleisten 234-1 und 234-2 kann der Aufspannschlitten 218 frei vertikal verfahren werden.

In dem über dem Lesekopf 210 befindlichen Raum, der eine Fortsetzung der lichten Kontur des Lesekopfes 210 darstellt, kann eine schematisch angedeutete kreisscheibenförmige Löscheinheit 258 angeordnet sein, die z.B. eine Leuchtstoffröhre und ein dieses umgebendes Löschlicht-Filter enthält. Sie hat einen in Umfangsrichtung verlaufenden Austrittsspalt für intensives Löschlicht.

In Betracht kommen auch andere Breitband-Lichtquellen, wie z.B. Halogen- oder Xenon-Lampen in Kombination mit entsprechenden Filtern oder Schmalband-Lichtquellen wie LEDs ohne Filter.

Die Löscheinheit 258 ist durch geeignete Mittel, z.B. eine bis knapp vor die Arbeitsschicht der zylindrisch gebogenen Speicherfolie 10 reichende Blende 260 (für Löschlicht und Fluoreszenzlicht) oder ein entsprechendes Farbfilter gegen den Lesekopf 210 lichtmäßig abgeschottet, so daß durch Löschlicht kein Löschen noch nicht ausgelesener Bereiche der Speicherfolie 10 erfolgt. Gleichzeitig ist gewährleistet, daß kein beim Löschvorgang entstehendes Fluoreszenzlicht den Lesekopf 210 erreicht und das Auslesen verfälscht.

Das gesamte oben beschriebene Auslese- und Löschgerät ist in einem lichtdichten Gehäuse 262 untergebracht zu dessen Innerem nur über durch die Aufnahmeschächte 84-1 und 84-2 gebildeten Schleusen Zutritt besteht.

Die obere Transfereinheit 82-2 ist abgesehen von der Lagerung der Transferleiste 234-2 genauso ausgebildet, wie oben für die untere Transfereinheit 82-1 beschrieben.

Der Aufspannschlitten 218 wird nach dem vollständigen Auslesen der Speicherfolie 10 noch um eine kleine Strecke weiterbewegt, bis seine Führungsschienen 230, 231, 232 auf exakt der gleichen Höhe stehen wie die Führungsschienen 74, 76 einer leeren Kassette 62-2, die in der oberen Transfereinheit 82-2 mit offener Verschlußklappe 70 wartet.

Aus dieser den Verhältnissen gemäß Figur 17 entsprechenden Stellung wird die Speicherfolie 10 dadurch herausbewegt, daß man die dortige Greifleiste 236-2 radial auf die Profilschiene 44 ausrichtet und den Antriebsarm 242 im Uhrzeigersinne in Bewegung setzt. Die Greifleiste 236-2 schiebt dann die gelöschte Speicherfolie 10 in den Profilschienen 230, 231, 232 zurück.

Dabei wird dann das andere Ende der Speicherfolie 10 mit der Profilschiene 46 und den ersten dortigen Führungsteilen 24 über die Führungs-Übergangsstücke 240 in die Kassette 62-2 geschoben, wo die Führungsstücke 24 in die dortigen Profilschienen 74, 76 aufgenommen werden.

Nach weiterem Drehen des Antriebsarmes 42 erhält man eine Situation, wie sie in Figur 5 dargestellt ist. Die Speicherfolie 10 ist nun vollständig in die leere Kassette 62-3 eingeschoben.

Durch Ausklinken des Hakenabschnittes 238 und leichtes Zurückfahren des Antriebsarmes 242 wird dann die Greifleiste 236 aus der Folien-Beschickungsöffnung 90 herausbewegt. Nun kann die Kassette 62 in der Zeichnung nach rechts aus dem Kassetten-Aufnahmeschacht 84 der oberen Transfereinheit 82-2 herausgezogen werden.

Bei dieser Bewegung kommen dann die Steuerkörper 174 der Kassette von dem für die jeweilige Kassette wirksamen der Betätigungsstifte 184 frei, und die Verschlußklappe 70 wird unter der Kraft der Feder 180 wieder dicht verschlossen.

Die so wieder mit einer gelöschten Speicherfolie 10 bestückte Kassette 62 ist nun für eine neue Röntgenaufnahme bereit.

Dadurch, daß man anschließend den Aufspannschlitten 218 wieder in seine untere Stellung zurückfährt, kann der oben beschriebene Zyklus wiederholt und eine belichtete Speicherfolie ausgelesen und gelöscht werden.

In Abwandlung des oben beschriebenen Ausführungsbeispiels kann man für eine Speicherfolie auch solche Führungsteile vorsehen, die von zwei gegenüberliegenden Rändern derselben getragen werden.

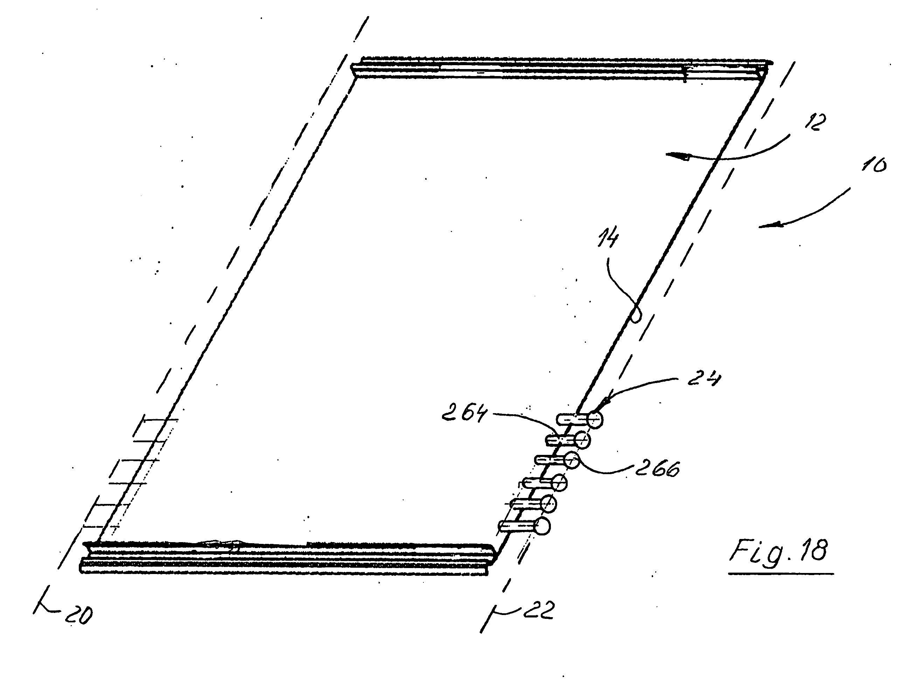

Beim Ausführungsbeispiel nach Figur 18 tragen die beiden Längsränder der Speicherfolie 10 jeweils Führungsteile 24, die einen am Folienrand befestigten (z.B. angeklebten) Zapfenabschnitt 264 und einen von diesem getragen kugelförmigen Führungsabschnitt 266 aufweisen. Es versteht sich, daß die Führungsschienen dann entsprechend angepaßte Geometrie aufweisen und seitlich außerhalb der Bahn der Speicherfolie 10 angeordnet sind.

Auch bei dieser Geometrie und Anbringung der Führungsteile 24 ist gewährleistet, daß die Speicherfolie sowohl innerhalb der Kassette 62 als auch auf dem Aufspannschlitten 218 als auch beim Überführen zwischen Kassette und Auspannschlitten nicht beschädigt werden kann. Auch die in Figur 18 gezeigten Führungsteile 24 gewährleisten, daß die Biegbarkeit der Folie zu Zylindergestalt erhalten bleibt.

In Abwandlung des oben beschriebenen Ausführungsbeispieles kann man zur Abschottung des Löschlichtes eine kreisförmige Dichtbürste mit radial ausgerichteten Borsten verwenden oder zusätzlich verwenden, die mit der Speicherfolie zusammenarbeitet. Dabei kann man dann an den Umfangsbereichen des Aufspannschlittens 218, die nicht von Folienmaterial eingenommen sind, gemäß der Folienkrümmung gebogene die Lücken ausfüllende Abdeckwände vorsehen, die dann an diesen Stellen mit der Dichtbürste zusammenarbeiten. Man kann auch eine einzige solche Abdeckwand vorsehen, die sich hinter (unmittelbar radial außerhalb) der Speicherfolie befindet.

In weiterer Abwandlung der Erfindung kann man die Nockentriebe 252, 254 und 255, 256, die zur Erzeugng einer Radialkomponente der Bewegung der Greifleiste 236 dienen, durch einen steuerbaren Antrieb ersetzen, z.B. durch einen zwischen Transferleiste 234 und Antriebsarm 242 wirkenden Linearmotor 268, der in den Figuren 15 und 17 gestrichelt angedeutet ist.

Die Ansteuerung des Linearmotors 268 kann dann in Abhängigkeit vom Ausgangssignal eines Winkelgebers 270 erfolgen, der mit der Welle des Antriebsmotors 248 zusammenarbeitet, wie in Figur 14 gezeigt.

Man kann dann an beliebigen Stellen der Führungsschienen 230, 231, 232 die Greifleiste 236 in oder außer Eingriff mit einer Profilleiste 44, 46 bringen. Dies ermöglicht es mehrere kleinere Speicherfolien aneinanderstoßend in die Führungsschienen 230, 231, 232 des Aufspannschlittens zu ziehen und diese gemeinsam auszulesen. Die Trennung Zuordnung der Bildsignale zu den einzelnen Bildern erfolgt dann elektronisch in der Auswerteschaltung, wie in der WO 01/18796 A1 beschrieben.

In nochmals weiterer Abwandlung kann man anstelle der zum Lesekopf 210 koaxialen Löscheinheit 258 oder zusätzlich zu dieser eine stabförmige Löschlampe in der Nachbarschft der Folien-Beschickungsöffnung 90 vorsehen, um die Speicherfolien beim Wieder-Zurückschieben in die Kassette 62 zu löschen. Diese Lampe ist elektrisch so lange verriegelt, bis das Auslesen des latenten Röntgenbildes abgeschlossen ist.

## Patentansprüche

1. Positioniereinrichtung mit einer Speicherfolie (10), welche geeignet zur Aufnahme eines Röntgenbildes ist und eine auf elektromagnetische Strahlung ansprechende Arbeitsseite (16) und eine Rückseite aufweist, wobei sie längs mindestens einer Führungslinie (20, 22) mit Führungsmitteln (24) versehen ist, welche die Biegbarkeit der Speicherfolie (10) in einer zur Führungslinie (20, 22) geneigten und in der Folienebene liegenden Achsen erhalten, und mit einer gestreckten Führungsschiene (74, 76; 230, 232), welche verglichen mit der Speicherfolie (10) starr ist und mit welcher die Führungsmittel (24) jeweils zusammenarbeiten,
**dadurch gekennzeichnet, dass**
die auf einer Führungslinie (20, 22) angeordneten Führungsmittel (24) diskrete Führungsteile sind, die entlang der Führungslinie (20, 22) beabstandet an der Speicherfolie (10) angebracht sind.

2. Positioniereinrichtung nach Anspruch 1, **dadurch gekennzeichnet, daß** die Führungsteile (24) aus einem Material hergestellt sind, welches verglichen mit der Speicherfolie (10) starr ist.

3. Positioniereinrichtung nach Anspruch 2, **dadurch gekennzeichnet, daß** die Führungsteile (24) eine im wesentlichen ebene Befestigungsfläche aufweisen, welche mit der Speicherfolie (10) in flächigem Kontakt verbunden sind, insbesondere verklebt oder verschweißt ist.

4. Positioniereinrichtung nach einem der Ansprüche 1 bis 3, **dadurch gekennzeichnet, daß** die Führungsteile (249 zwei symmetrisch zu einer Mittellinie angeordnete Führungsarme (26, 28) aufweisen, deren Haupterstreckungsrichtung parallel zur Folienebene verläuft, vorzugsweise zugleich senkrecht zu den Führungslinien (20, 22).

5. Positioniereinrichtung nach einem der Ansprüche 1 bis 4, **dadurch gekennzeichnet, daß** ein mittiger Abschnitt der Führungsteile (24) als hohles Kastenteil ausgebildet ist.

6. Positioniereinrichtung nach einem der Ansprüche 1 bis 5, **dadurch gekennzeichnet, daß** zur Folienebene parallele Begrenzungsflächen (36, 38) der Führungsteile (24) konvex gekrümmt sind.

7. Positioniereinrichtung nach einem der Ansprüche 1 bis 6, **dadurch gekennzeichnet, daß** die freien Enden der Führungsteile (24) gebogene Randkontur aufweisen.

8. Positioniereinrichtung nach einem der Ansprüche 1 bis 3, **dadurch gekennzeichnet, daß** die Führungsteile (24) zumindest teilweise rotationssymmetrische Führungsabschnitte (264) aufweisen, vorzugsweise mit Kugelform.

9. Positioniereinrichtung nach einem der Ansprüche 2 bis 8, **dadurch gekennzeichnet, daß** der Abstand aufeinanderfolgender Führungsteile (24) bei den Enden der Führungslinien (20, 22) kleiner ist als im Inneren der Führungslinien.

10. Positioniereinrichtung nach einem der Ansprüche 1 bis 9, **dadurch gekennzeichnet, daß** die Speicherfolie (10) bei mindestens einem ihrer senkrecht auf den Führungslinien (20, 22) verlaufenden Enden eine Profilleiste (44, 46) aufweist.

11. Positioniereinrichtung nach Anspruch 10, **dadurch gekennzeichnet, daß** die Speicherfolie (10) bei beiden Enden ihrer Führungslinien (20, 22) senkrecht auf letzteren stehende Profilleisten (44, 46) aufweist.

12. Positioniereinrichtung nach Anspruch 10 oder 11, **dadurch gekennzeichnet, daß** die Profilleisten (44, 46) einen in Richtung der Führungslinien hinterschnittenen Greifabschnitt (50-54) aufweisen.

13. Posiotioniereinrichtung nach einem der Ansprüche 10 bis 12, **dadurch gekennzeichnet, daß** die Profilleisten (44, 46) einen in Richtung der Führungslinien (20, 22) wirkenden Anschlagabschnitt (56, 58) aufweisen.

14. Positioniereinrichtung nach einem der Ansprüche 10 bis 13, **dadurch gekennzeichnet, daß** die Profilteile (44, 46) Blechbiegeteile oder Extrusionsprofile sind.

15. Positioniereinrichtung nach einem der Ansprüche 10 bis 14, **dadurch gekennzeichnet, daß** die Profilleisten (44, 46) in Nachbarschaft der Führungslinien (20, 22) jeweils eine Ausnehmung (60) aufweisen, in welcher die Führungsschiene (74, 76; 230, 232) unter Spiel Aufnahme finden kann.

16. System mit einer Positioniereinrichtung nach einem der Ansprüche 1 bis 15 und einem Auslesegerät zum Auslesen der Speicherfolie (10), das einen Lesekopf (210), der einen in einer ersten Richtung bewegten Auslesestrahl (212) erzeugt, eine Aufspanneinrichtung (218) zum Aufspannen der Speicherfolie (10) in vorgegebener fester Geometrie sowie eine Vorschubeinrichtung (220 bis 224) zur Erzeugung einer Relativbewegung zwischen dem Lesekopf (210) und der Aufspanneinrichtung (218) in einer zweiten, von der ersten verschiedenen Richtung, aufweist, **dadurch gekennzeichnet, daß** die Führungsschiene (230, 232) Teil der Aufspanneinrichtung (212) ist.

17. System nach Anspruch 16, **dadurch gekennzeichnet, daß** die Führungsschienen (230, 232) der Aufspanneinrichtung (218) kreisförmig gebogen sind.

18. System nach Anspruch 16 oder 17, **dadurch gekennzeichnet, daß** die Aufspanneinrichtung (218) längs der Achse des Lesekopfes (210) verschiebbar ist.

19. System nach Anspruch 18, **dadurch gekennzeichnet, daß** der Lesekopf (210) einen in einer transversalen Ebene umlaufenden Lesestrahl (212) erzeugt und eine Detektionseinrichtung für von der Speicherfolie (10) in röntgenbelichteten Bereichen abgegebenes Fluoreszenzlicht enthält.

20. System mit einer Positioniereinrichtung nach einem der Ansprüche 1 bis 15 und einer Kassette zur Aufnahme der Speicherfolie, **dadurch gekennzeichnet, daß** die Führungsschienen (74, 76) von einer Kassettenwand derart getragen sind, daß sie senkrecht zur Ebene einer Beschickungsöffnung (72) verlaufen.

21. System nach Anspruch 20, **dadurch gekennzeichnet, daß** die Führungsschiene (70, 74) von einer Hauptwand (64) so getragen sind, daß die Arbeitsseite (16) der Speicherfolie (10) von einer der genannten Hauptwand gegenüberliegenden weiteren Hauptwand (66) beabstandet ist.

22. System nach Anspruch 21, **dadurch gekennzeichnet, daß** die erste Hauptwand (64) oder die ihr gegenüberliegende Hauptwand (66) mit Mitnehmmitteln (78, 80) versehen sind, an welchen Schubmittel (100) angreifen können.

23. System nach einem der Ansprüche 20 bis 22, **dadurch gekennzeichnet, daß** sie eine Verschlußklappe (70) aufweist, die zwischen einer die Beschickungsöffnung (72) lichtdicht verschließenden und einer die Beschickungsöffnung (72) freigebenden Stellung bewegbar ist.

24. System nach Anspruch 23, **dadurch gekennzeichnet, daß** die Verschlußklappe (70) um eine zu den Führungsschienen (74, 76) transversale Achse (164) verschwenkbar ist.

25. System nach Anspruch 23 oder 24, **gekennzeichnet durch** eine Betätigungsmechanik (174-178) für die Verschlußklappe (70), welche ein von der Außenseite der Kassette (62) zugängliches Eingangsteil (174) aufweist.

26. System nach Anspruch 25, **dadurch gekennzeichnet, daß** das Eingangsteil (174) parallel zu den Führungsschienen (74, 76) verfahrbar ist und seine Endfläche bei der durch die Verschlußklappe (70) verschließbaren Kassettenseite liegt.

27. System nach Anspruch 26, **dadurch gekennzeichnet, daß** das Eingangsteil (174) eine Steuerfläche (176) aufweist, welche mit einem mit der Verschlußklappe (70) verbundenen Folgeteil (178) zusammenarbeitet.

28. System nach einem der Ansprüche 20 bis 27, **dadurch gekennzeichnet, daß** die Verschlußklappe (70) mindestens einen Dichtsteg (166, 167, 168) aufweist, der in eine fluchtende Dichtnut (170, 171, 172) einer Kassettenwand (64, 66) einfahrbar ist.

29. System mit einer Positioniereinrichtung nach einem der Ansprüche 1 bis 15, mit einem System nach einem der Ansprüche 16 bis 19, mit einem System nach einem der Ansprüche 20 bis 28 und einer Transfereinrichtung zum Bewerkstelligen eines Transfers der Speicherfolie (10) zwischen der Kassette (62) und dem Auslesegerät (200), **dadurch gekennzeichnet, dass** die Transfereinrichtung einen Aufnahmeschacht (84) für die Kassette (62), eine Betätigungsmechanik (174-178, 184, 186) für deren Verschlußklappe (70), die beim Einschieben der Kassette (62) in den Aufnahmeschacht (84) arbeitet, und einen Greifer (234, 236) aufweist, der in und aus der Beschickungsöffnung (72) der Kassette (62) bewegbar ist und an der Speicherfolie (10) angreifen kann.

30. System nach Anspruch 29, **dadurch gekennzeichnet, daß** der Greifer (234, 236) eine Greifleiste (236) aufweist, die auf Zug und Druck mit einer Profilleiste (50) der Speicherfolie (10) zusammenarbeiten kann.

31. System nach Anspruch 30, **dadurch gekennzeichnet, daß** die Greifleiste (236) als Winkelprofil ausgebildet ist, welches einen Hakenabschnitt (238) aufweist, der in die Profilleiste (50) eingreifen kann.

32. System nach Anspruch 31, **dadurch gekennzeichnet, daß** die Greifleiste (236) auf einer Trägerleiste (234) angeordnet ist, welche um eine zu den Führungsschienen (70, 74; 230, 232) senkrechte, zur Folienebene parallele Achse (260) verschwenkbar ist.

33. System nach einem der Ansprüche 29 bis 32, **dadurch gekennzeichnet, daß** der Greifer (236) von einem Antriebsarm (242) getragen ist, welcher um die Achse des Lesekopfes (210) drehbar ist.

34. System nach Anspruch 33, **dadurch gekennzeichnet, daß** der Greifer (236) mit einem Nockenfolger (252) verbunden ist, der mit einer raumfesten Nockenfläche (254) so zusammenarbeitet, daß die Greifer (234, 236) in der Nachbarschaft der Beschickungsöffnung (72) der Kassette (62) im wesentlichen parallel zu den Führungsschienen (74, 76) der Kassette (62) bewegt wird.

35. System nach einem der Ansprüche 29 bis 33, **gekennzeichnet durch** mindestens einen Abdeckkörper (94, 96, 98), welcher einen Kassetten-Aufnahmeraum (86) des Aufnahmeschachtes (84) verschließen kann, wenn sich dort keine Kassette (62) befindet.

36. System nach Anspruch 35, **dadurch gekennzeichnet, daß** sie mehrere nebeneinander liegende unabhängig betätigbare Abdeckkörper (94, 96, 98) aufweist, die jeweils über einen zugeordneten Stellhebel (148) bewegbar sind, der durch eine eingeschobene Kassette (62) antreibbar ist, wobei die Abdeckkörper (94, 96, 98) zusammen den Kassetten-Aufnahmeraum (86) vollständig verschließen können und bei Verwendung von Kassetten unterschiedlicher Größe die von den Kassetten nicht ausgefüllten Bereiche des Kassetten-Aufnahmeraumes (86) verschließen können.

37. System nach Anspruch 36, **dadurch gekennzeichnet, daß** die verschiedenen Abdeckkörper (94, 96, 98) Lagerbohrungen aufweisen, die auf einer gemeinsamen Lagerachse (144) laufen.

38. System nach einem der Ansprüche 35 bis 37, **dadurch gekennzeichnet, daß** die Abdeckkörper (94, 96, 98) mit einem freien Endabschnitt in eine Vertiefung (138) einführbar sind, die in einer Wand (134) der Schachtaufnahme (84) ausgebildet ist.

39. System nach einem der Ansprüche 36 bis 38, **gekennzeichnet durch** jeweils einen Riegel (156) zum Verriegeln eines zugeordneten Abdeckkörpers (94, 96, 98) in seiner Schließstellung, wobei der Riegel jeweils **durch** eine Verbindungseinrichtung (154) mit dem Stellhebel (148) des betrachteten Abdeckkörpers (94, 96, 98) verbunden ist.

40. System nach einem der Ansprüche 36 bis 39, **dadurch gekennzeichnet, daß** der Stellhebel (148) mit einem Abdeckflügel (152) verbunden ist, welcher in der beim Fehlen einer Kassette (62) eingenommenen Schließstellung des Abdeckkörpers (94, 96, 98) eine Öffnung (150) einer Schachtwand (136) verschließt, durch welche der Stellhebel (148) hindurchgeführt ist.

41. System nach einem der Ansprüche 36 bis 40, **dadurch gekennzeichnet, daß** die Abdeckköper (94, 96, 98) seitliche Abdeckflansche (95) aufweisen, mit den sie einen benachbarten Abdeckkörper oder einen Rand einer die Abdeckkörper (94, 96, 98) aufnehmenden Wand (136) des Aufnahmeschachtes (84) überdecken können.

42. System nach einem der Ansprüche 29 bis 41, **dadurch gekennzeichnet, daß** zumindest ein in Bewegungsrichtung der Kassette (62) feststehender Anschlag (184) vorgesehen ist, welcher in der letzten Phase der Einschubsbewegung der Kassette (62) mit einem Eingangsteil (174) der Verschlußklappen-Betätigungsmechanik (174-178) zusammenarbeitet, wobei der genannte Anschlag (184) zwischen einer mit dem Eingangsteil (174) der Betätigungsmechanik (170-178) fluchtenden Arbeitsstellung und einer von der letzteren entfernten Ruhestellung bewegbar (186) ist.

43. System nach Anspruch 42, **dadurch gekennzeichnet, daß** der Anschlagstift (184) von einem verschwenkbaren Flügel (186) getragen ist, der bei Fehlen einer Kassette (62) in einer schräg zur Kassettenebene abfallenden Richtung steht.

44. System nach Anspruch 43, **dadurch gekennzeichnet, daß** der von der Schwenkachse (188) abgelegene freie Rand des Flügels (186) abgetreppt ist.

45. System nach einem der Ansprüche 29 bis 44, **dadurch gekennzeichnet, daß** eine Wand (136) des Aufnahmeschachtes (84) Durchgangsfenster (103) aufweist, durch welche hindurch Schubelemente (100) mit Mitnahmemmitteln (78, 80) der Kassette (62) zusammenarbeiten können.

46. System nach Ansspruch 44, **dadurch gekennzeichnet, daß** die Schubelemente (100) durch biegbare Material-stücke gebildet sind, die in einem Führungsschlitz (101) geführt sind.

47. System nach Anspruch 46, **dadurch gekennzeichnet, daß** die Schubelemente (100) von einer gestreckten Schubleiste (102) getragen sind, die in Kassetten-Einschubrichtung verlagerbar ist.

48. System nach Anspruch 47, **dadurch gekennzeichnet, daß** die Schubleiste (102) über mindestens einen Gewindetrieb (108) von einem Motor (114) verstellt wird.

49. System nach Anspruch 48, **dadurch gekennzeichnet, daß** die Schubleiste (102) durch zwei beabstandete Gewindetriebe (108) bewegt wird, die über einen Riementrieb (110) gekoppelt sind.

50. System nach einem der Ansprüche 29 bis 49, daduch geknnzeichnet, daß der Aufnmahmeschacht (84) einem Endstellungsanschlag (118) für die voll eingeschobenen Stellung der Kassette (62) aufweist, der von einer Speicherfolie (10) passiert werden kann.

51. System nach Anspruch 50 in Verbindung mit Anspruch 42, **dadurch gekennzeichnet**, der Aufnahmeschacht einen zusätzlichen Anschlag (132) aufweist, der zwischen einer Arbeitsstellung, in welcher er vor dem Endstellungsnaschlag (118) steht und die Kassette (62) an einer Stelle anhält, in welcher die Betätigungsmechanik (170-178) für die Verschlußklappe (70) der Kassette (62) noch nicht gearbeitet hat, und einer hinter dem Endstellungsanschlag liegenden Ruhestellung verlagerbar ist.

52. System nach Anspruch 51, **dadurch gekennzeichnet, daß** der zusätzliche Anschlag (132) mit auf die Kassette (62) arbeitenden Schubmitteln (100) gekoppelt (130, 133) ist.

53. System nach einem der Ansprüche 29 bis 52, **dadurch gekennzeichnet, daß** zwischen den Führungsschienen (230, 232) der Folien-Aufspanneinrichtung (218) und den Führungsschienen (74, 76) einer in dem Aufnahmeschacht (84) befindlichen Kassette (62) Übergangsstücke (240) angeordnet sind.

54. System nach Anspruch 53, **dadurch gekennzeichnet, daß** die Führungs-Übergangsstücke (240) kassettenseitig auf ihren Tragflansch reduziert sind, so daß die Übergangsstücke gabelähnliche Gestalt haben.

55. System nach einem der Ansprüche 29 bis 54, **dadurch gekennzeichnet, daß** sie zwei fluchtend nebeneinander liegende Aufnahmeschächte (84-1, 84-2) aufweist, denen jeweils ein Greifer (234, 236) zugeordnet ist, der unabhängig vom anderen Greifer bewegbar ist.

56. System nach Anspruch 55, **dadurch gekennzeichnet, daß** der Lesekopf (210) in seiner axialen Erstreckung im wesentlichen mit einem ersten (84-1) der Aufnahmeschächte (84-1, 84-2) fluchtet, während in einem axial mit dem zweiten Aufnahmeschacht (84-2) fluchtenden Raum eine Folien-Löscheinrichtung (258) vorgesehen ist.

57. System nach Anspruch 56, **dadurch gekennzeichnet, daß** zwischen der Folien-Löscheinrichtung (258) und dem Lesekopf (210) eine für Löschlicht undurchlässige Sperre (260) vorgesehen ist, welche z. B. durch eine Blende oder ein geeignetes Filter gebildet sein kann.

58. System nach Anspruch 57, **dadurch gekennzeichnet, daß** die Sperre auch für Fluoreszenzlicht undurchlässig ist.

59. System nach einem der Ansprüche 29 bis 58, **dadurch gekennzeichnet, daß** ein Antrieb (268) zum Erzeugen einer Zusatzbewegung des Greifers (234, 236) in zur Richtung der Führungsschienen (74, 76; 230, 231, 232) geneigter, insbesondere senkrecht geneigter Richtung vorgesehen ist.

60. System nach einem der Ansprüche 29 bis 59, **dadurch gekennzeichnet, daß** bei den Führungsschienen (230, 231, 232) des Auslesegerätes (200) mindestens eine der Geometrie der Führungsschienen (230, 231, 232) angepasste Abdeckwand vorgesehen ist, welche nicht von einer Speicherfolie eingenommene Bereiche abdeckt.

61. System nach einem der Ansprüche 29 bis 60, **gekennzeichnet durch** eine stabförmige Löschlampe, die in der Nachbarschaft des dem Auslesegerät (200) zugewandten Endes des Aufnahmeschachtes (84) angeordnet ist.

## Claims

1. Device for positioning a storage film (10) which has a working side (16) suitable for taking an x-ray image that responds to electromagnetic radiation and a rear side, wherein said film is provided, along at least one guide line (20, 22), with guide means (24) which maintain the ability of the storage film (10) to bend in an axis which is inclined in relation to said guide line (20, 22) and lies in the plane of the film and wherein the guide means (24) each cooperate with an elongated guide rail (74, 76) which is rigid, compared with the storage film., **characterised in that** the guide means (24) which are arranged on a guide line (20, 22) are discrete guide parts, which are attached to said storage film (10) in a spaced-apart manner to the rear side thereof being not light sensitive.

2. Device according to claim 1, **characterised in that** the guide parts (24) are manufactured from a material which is rigid, compared with the storage film (10).

3. Device according to claim 2, **characterised in that** the guide parts (24) have a substantially flat fastening face which is connected, in particular bonded or welded, to the storage film (10) in laminar contact.

4. Device according to one of claims 1 to 3, **characterised in that** the guide parts (249) have two guide arms (26, 28) which are arranged symmetrically in relation to a central line and whose main direction of extension extends parallel to the plane of the film and preferably, at the same time, perpendicularly to the guide lines (20, 22).

5. Device according to one of claims 1 to 4, **characterised in that** a central section of the guide parts (24) is constructed as a hollow box part.

6. Device according to one of claims 1 to 5, **characterised in that** boundary faces (36, 38) of the guide parts (24), which boundary faces lie parallel to the plane of the film, are convexly curved.

7. Device according to one of claims 1 to 6, **characterised in that** the free ends of the guide parts (24) have an arcuate marginal contour.

8. Device according to one of claims 1 to 3, **characterised in that** the guide parts (24) have at least partially rotationally symmetrical guide sections (264), preferably having a spherical shape.

9. Device according to one of claims 2 to 8, **characterised in that** the distance between successive guide parts (24) at the ends of the guide lines (20, 22) is smaller than within the guide lines.

10. Device according to one of claims 1 to 9, **characterised in that** the storage film (10) has a profiled strip (44, 46) at at least one of its ends that extend perpendicularly on the guide lines (20, 22).

11. Device according to claim 10, **characterised in that** the storage film (10) has, at both ends of its guide lines (20, 22), profiled strips (44, 46) that are positioned perpendicularly on said guide lines.

12. Device according to claim 10 or 11, **characterised in that** the profiled strips (44, 46) have a gripping section (50-54) which is undercut in the direction of the guide lines.

13. Device according to one of claims 10 to 12, **characterised in that** the profiled strips (44, 46) have a stop section (56, 58) that acts in the direction of the guide lines (20, 22).

14. Device according to one of claims 10 to 13, **characterised in that** the profiled parts (44, 46) are sheet-metal bending parts or extruded profiles.

15. Device according to one of claims 10 to 14, **characterised in that** the profiled strips (44, 46) each have, in the vicinity of the guide lines (20, 22), a recess (60) in which a guide rail (74, 76; 230, 232) can be received with clearance.

16. Apparatus for reading a storage film (10), using a positioning device according to one of claims 1 to 15, said apparatus having a reading head (210) which generates a treading beam (212) which is moved in a first direction; having a clamping device (218) for clamping the storage film (10) in a preset, fixed geometry; and having a feed device (220 to 224) for generating a relative movement between the reading head (210) and the clamping device (218) in a second direction which is different from the first direction, **characterised in that** the guide rails (230, 232) are part of the clamping device (212).

17. Apparatus according to claim 16, **characterised in that** the guide rails (230, 232) of the clamping device (218) are arched in the shape of a circle.

18. Apparatus according to claim 16 or 17, **characterised in that** the clamping device (218) is displaceable along the axis of the reading head (210).

19. Apparatus according to claim 18, **characterised in that** the reading head (210) generates a reading beam (212) revolving in a transverse plane, and contains a detection device for the fluorescent light emitted by the storage film (10) in regions that have been exposed by X-rays.

20. Cassette for receiving a storage film, using a positioning device according to one of claims 1 to 15, **characterised in that** the guide rails (74, 76) are carried by a wall of the cassette in such a way that they extend perpendicularly to the plane of a loading aperture (72).

21. Cassette according to claim 20, **characterised in that** the guide rails (74, 76) are carried by a main wall (64) in such a way that the working side (16) of the storage film (10) is spaced apart from another main wall (66) that lies opposite the aforesaid main wall.

22. Cassette according to claim 21, **characterised in that** the first main wall (64) or the main wall (66) that lies opposite the latter is provided with entraining means (78, 80) upon which thrust means (100) can act.

23. Cassette according to one of claims 20 to 22, **characterised in that** it has an occluding flap (70) which can be moved between a position that occludes the loading aperture (72) in a light-tight manner and a position that unblocks said loading aperture (72).

24. Cassette according to claim 23, **characterised in that** the occluding flap (70) can be tilted about a spindle (164) which is transverse to the guide rails (74, 76).

25. Cassette according to claim 23 or 24, **characterised by** an actuating mechanism (174-178) for the occluding flap (70), which mechanism has an input part (174) which is accessible from the outside of the cassette (62).

26. Cassette according to claim 25, **characterised in that** the input part (174) is capable of travel parallel to the guide rails (74, 76) and its end face lies close to the side of the cassette that can be occluded by the occluding flap (70).

27. Cassette according to claim 26, **characterised in that** the input part (174) has a control face (176) which cooperates with a follower part (178) connected to the occluding flap (70).

28. Cassette according to one of claims 20 to 27, **characterised in that** the occluding flap (70) has at least one sealing web (166, 167, 168) which can be retracted into an aligned sealing groove (170, 171, 172) in a wall (64, 66) of the cassette.

29. Device for bringing about a transfer of a storage film (10) between a cassette (62) according to one of claims 20 to 28 and a reader (200) according to one of claims 16 to 19 including a positioning device according to one of claims 12 to 15, **characterised by** a receiving shaft (84) for a cassette (62); by an actuating mechanism (174-178, 184, 186) for the occluding flap (70) of the cassette, which works when said cassette (62) is inserted in the receiving shaft (84); and by a gripper (234, 236) which can be moved into and out of the loading aperture (72) of the cassette (62) and can act upon a storage film (10).

30. Device according to claim 29, **characterised in that** the gripper (234, 236) has a gripping strip (236) which is capable of cooperating, in respect of pulling and pushing, with a profiled strip (50) of the storage film (10).

31. Device according to claim 30, **characterised in that** the gripping strip (236) is constructed as an angled profile which has a hook section (238) which is capable of engaging in the profiled strip (50).

32. Device according to claim 31, **characterised in that** the gripping strip (236) is arranged on a carrier strip (234) which can be tilted about an axis (260) which is perpendicular to the guide rails (70, 74; 230, 232) and parallel to the plane of the film.

33. Device according to one of claims 29 to 32, **characterised in that** the gripper (236) is carried by a driving arm (242) which can be rotated about the axis of the reading head (210).

34. Device according to claim 33, **characterised in that** the gripper (236) is connected to a cam-follower (252) which interacts with a spatially fixed cam face (254) in such a way that the gripper (234, 236) is moved, in the vicinity of the loading aperture (72) of the cassette (62), substantially parallel to the guide rails (74, 76) of said cassette (62).

35. Device according to one of claims 29 to 33, **characterised by** at least one covering member (94, 96, 98; which is capable of occluding a cassette-receiving compartment (86) of the receiving shaft (84) when no cassette (62) is located therein.

36. Device according to claim 35, **characterised in that** it has a number of independently actuatable covering members (94, 96, 98) which lie side by side and can each be moved via an associated positioning lever (148) which can be driven by an inserted cassette (62), said covering members (94, 96, 98) being capable, together, of completely occluding the cassette-receiving compartment (86) and, when cassettes of different size are used, of occluding those regions of said cassette-receiving compartment (86) which are not filled up by the cassettes.

37. Device according to claim 36, **characterised in that** the various covering members (94, 96, 98) have bearing bores which run on a common bearing spindle (144).

38. Device according to one of claims 35 to 37, **characterised in that** the covering members (94, 96, 98) can be introduced, by a free end section, into a depression (138) which is constructed in a wall (134) of the shaft receptacle (84).

39. Device according to one of claims 36 to 38, **characterised by** a bolt (156), in each case, for flocking an associated covering member (94, 96, 98) in its closing position, said bolt being connected in each case, by a connecting device (154), to the positioning lever (148) of the covering member (94, 96, 98) under consideration.

40. Device according to one of claims 36 to 39, **characterised in that** the positioning lever (148) is connected to a covering vane (152) which, **in that** closing position of the covering member (94, 96, 98) which is assumed in the absence of a cassette (62), occludes an aperture (150) in a wall (136) of the shaft, through which said positioning lever (148) passes in.

41. Device according to one of claims 36 to 40, **characterised in that** the covering members (94, 96, 98) have lateral masking flanges (95), by means of which they are capable of masking an adjacent covering body or an edge of a wall (136) of the receiving shaft (84) that receives said covering members (94, 96, 98).

42. Device according to one of claims 29 to 41, **characterised in that** at least one stop (184) is provided, which is stationary in the direction of movement of the cassette (62) and which cooperates, in the last phase of the movement of insertion of the cassette (62), with an input part (174) of the occluding-flap-actuating mechanism (174-178), the aforesaid stop (184) being movable between a working position which is in alignment with the input part (174) of the actuating mechanism (170-178), and an inoperative position (186) which is remote from said working position.

43. Device according to claim 42, **characterised in that** the stop pin (184) is carried by a tiltable vane (186) which, in the absence of a cassette (62), is positioned in a direction which slopes down obliquely to the plane of the cassette.

44. Device according to claim 43, **characterised in that** that free edge of the vane (186) which is set down by the swivel pin (188) is stepped.

45. Device according to one of claims 29 to 44, **characterised in that** one wall (136) of the receiving shaft (84) has through-windows (103) through which thrust elements (100) are capable of cooperating with entraining means (78, 80) of the cassette (62).

46. Device according to claim 44, **characterised in that** the thrust elements (100) are formed by bendable pieces of material which are guided in a guide slit (101).

47. Device according to claim 46, **characterised in that** the thrust elements (100) are carried by an elongated thrust strip (102) which can be shifted in the direction of insertion of a cassette.

48. Device according to claim 47, **characterised in that** the thrust strip (102) is adjusted by a motor (114) via at least one threaded drive (108).

49. Device according to claim 48, **characterised in that** the thrust strip (102) is moved by two spaced-apart threaded drives (108) which are coupled via a belt drive (11C).

50. Device according to one of claims 29 to 49, **characterised in that** the receiving shaft (84) has an end-position stop (118) for the fully inserted position of the cassette (62), which stop can be passed over by a storage film (10).

51. Device according to claim 50 in conjunction with claim 42, **characterised in that** the receiving shaft has an additional stop (132) which can be shifted between a working position, in which it is positioned in front of the end-position stop (118) and stops the cassette (62) at a point at which the actuating mechanism (170-178) for the occluding flap (70) of said cassette (62) has not yet operated, and an inoperative position that lies behind said end-position stop.

52. Device according to claim 51, **characterised in that** the additional stop (132) is coupled (130, 133) to thrust means (100) which act upon the cassette (62).

53. Device according to one of claims 29 to 52, **characterised in that** transition pieces (240) are arranged between the guide rails (230, 232) of the film-clamping device (218) and the guide rails (74, 76) of a cassette (62) located in the receiving shaft (84).

54. Device according to claim 53, **characterised in that** the guide-transition pieces (240) are reduced to their carrying flange on the cassette side, so that said transition pieces have a fork-like shape.

55. Device according to one of claims 29 to 54, **characterised in that** it has two receiving shafts (84-1, 84-2) which lie side by side in an aligned manner and with each of which a gripper (234, 236), which can be moved independently of the other gripper, is associated.

56. Device according to claim 55, **characterised in that** the reading head (210) is substantially in alignment, in its axial extension, with a first shaft (84-1) of the receiving shafts (84-1, 84-2), while a film-erasing device (258) is provided in a space which is axially in alignment with the second receiving shaft (84-2).

57. Device according to claim 56, **characterised in that** a barrier (260) which is impermeable to erasing light and which can be formed, for example, by a screen or a suitable filter, is provided between the film-erasing device (258) and the reading head (210).

58. Device according to claim 57, **characterised in that** the barrier is also impermeable to fluorescent light.

59. Device according to one of claims 29 to 58, **characterised in that** a drive (268) is provided for generating an additional movement of the gripper (234, 236) in a direction which is inclined, in particular inclined perpendicularly, in relation to the direction of the guide rails (74, 76; 230, 231, 232).

60. Device according to one of claims 29 to 59, **characterised in that** there is provided, close to the guide rails (230, 231, 232) of the reader (200), at least one covering wall which is adapted to the geometry of said guide rails (230, 231, 232) and which covers regions which are not occupied by a storage film.

61. Device according to one of claims 29 to 60, **characterised by** a bar-shaped erasing lamp which is arranged in the vicinity of that end of the receiving shaft (84) which faces towards the reader (200).

## Revendications

1. Dispositif de positionnement d'une feuille de stockage (10) qui permet d'enregistrer une radiographie et qui présente un côté de travail (16) sensible à un rayonnement électromagnétique et un côté arrière, celle-ci étant pourvue le long d'au moins une ligne de guidage (20, 22) de moyens de guidage (24) qui maintiennent la flexibilité de la feuille de stockage (10) sur un axe incliné par rapport à la ligne de guidage (20, 22) et situé dans le plan de la feuille,
les moyens de guidage (24) collaborant chacun avec un rail de guidage allongé (74, 76), lequel est rigide comparé à la feuille de stockage,
**caractérisé en ce**
**que** les moyens de guidage (24) disposés sur une ligne de guidage (20, 22) sont des pièces de guidage discrètes qui sont espacées le long de la ligne de guidage (20, 22) sur le côté arrière non sensible à la lumière de la feuille de stockage.

2. Dispositif selon la revendication 1, **caractérisé en ce que** les pièces de guidage (24) sont fabriquées dans un matériau qui est rigide par rapport à la feuille de stockage (10).

3. Dispositif selon la revendication 2, **caractérisé en ce que** les pièces de guidage (24) présentent une surface de fixation essentiellement plane qui est reliée à la feuille de stockage (10) en un contact plan, en particulier collée ou soudée.

4. Dispositif selon une des revendications 1 à 3, **caractérisé en ce que** les pièces de guidage (24) présentent deux bras de guidage (26, 28) disposés symétriquement par rapport à une ligne médiane, dont la direction d'extension principale s'étend parallèlement au plan de la feuille, de préférence en même temps perpendiculairement aux lignes de guidage (20, 22).

5. Dispositif selon une des revendications 1 à 4, **caractérisé en ce qu'**une portion centrale des pièces de guidage (24) est réalisée sous la forme d'une pièce en forme de boîte creuse.

6. Dispositif selon une des revendications 1 à 5, **caractérisé en ce que** des surfaces de limitation (36, 38) parallèles au plan de la feuille des pièces de guidage (24) présentent une courbure convexe.

7. Dispositif selon une des revendications 1 à 6, **caractérisé en ce que** les extrémités libres des pièces de guidage (24) présentent un contour périphérique coudé.

8. Dispositif selon une des revendications 1 à 3, **caractérisé en ce que** les pièces de guidage (24) présentent au moins partiellement des portions de guidage à symétrie de révolution (264), de préférence de forme sphérique.

9. Dispositif selon une des revendications 2 à 8, **caractérisé en ce que** la distance de pièces de guidage (24) successives est plus petite aux extrémités des lignes de guidage (20, 22) qu'à l'intérieur des lignes de guidage.

10. Dispositif selon une des revendications 1 à 9, **caractérisé en ce que** la feuille de stockage (10) présente une baguette profilée (44, 46) à au moins une de ses extrémités qui s'étendent perpendiculairement aux lignes de guidage (20, 22).

11. Dispositif selon la revendication 10, **caractérisé en ce que** la feuille de stockage (10) présente aux deux extrémités de ses lignes de guidage (20, 22) des baguettes profilées (44, 46) perpendiculaires à ces dernières.

12. Dispositif selon la revendication 10 ou 11, **caractérisé en ce que** les baguettes profilées (44, 46) présentent une portion de prise (50-54) en contre-dépouille en direction des lignes de guidage.

13. Dispositif selon une des revendications 10 à 12, **caractérisé en ce que** les baguettes profilées (44, 46) présentent une portion de butée (56 ; 58) agissant en direction des lignes de guidage (20, 22).

14. Dispositif selon une des revendications 10 à 13, **caractérisé en ce que** les pièces profilées (44, 46) sont des pièces pliées en tôle ou des profilés extrudés.

15. Dispositif selon une des revendications 10 à 14, **caractérisé en ce que** les baguettes profilées (44, 46) présentent au voisinage des lignes de guidage (20, 22) chaque fois un évidement (60) dans lequel un rail de guidage (74, 76 ; 230, 232) peut être reçu avec jeu.

16. Appareil de lecture d'une feuille de stockage (10) utilisant un dispositif de positionnement selon une des revendications 1 à 15, avec une tête de lecture (210) qui génère un faisceau de lecture (212) déplacé dans une première direction, avec un dispositif de serrage (218) pour serrer la feuille de stockage (10) dans une géométrie fixé prédéfinie ainsi qu'avec un dispositif d'avance (220 à 224) pour générer un mouvement relatif entre la tête de lecture (210) et le dispositif de serrage (218) dans une deuxième direction, différente de la première, **caractérisé en ce que** les rails de guidage (230, 232) font partie du dispositif de serrage (212).

17. Appareil selon la revendication 16, **caractérisé en ce que** les rails de guidage (230, 232) du dispositif de serrage (218) sont coudés en forme de cercle.

18. Appareil selon la revendication 16 ou 17, **caractérisé en ce que** le dispositif de serrage (218) peut coulisser le long de l'axe de la tête de lecture (210).

19. Appareil selon la revendication 18, **caractérisé en ce que** la tête de lecture (210) génère un faisceau de lecture (212) tournant dans un plan transversal et contient un dispositif de détection de la lumière de fluorescence émise par les zones de la feuille de stockage (10) exposées aux rayons X.

20. Cassette de réception d'une feuille de stockage utilisant un dispositif de positionnement selon une des revendications 1 à 15, **caractérisée en ce que** les rails de guidage (74, 76) sont portés par une paroi de cassette de façon qu'ils s'étendent perpendiculairement au plan d'une ouverture de chargement (72).

21. Cassette selon la revendication 20, **caractérisée en ce que** les rails de guidage (70, 74) sont portés par une paroi principale (64) de façon que le côté de travail (16) de la feuille de stockage (10) soit espacé d'une autre paroi principale (66) située en face de ladite paroi principale.

22. Cassette selon la revendication 21, **caractérisée en ce que** la première paroi principale (64) ou la paroi principale (66) qui lui fait face sont pourvues de moyens d'entraînement (78, 80) sur lesquels peuvent agir des moyens de poussée (100).

23. Cassette selon une des revendications 20 à 22, **caractérisée en ce qu'**elle présente un clapet de fermeture (70) qui peut être déplacé entre une position qui ferme l'ouverture de chargement (72) de manière étanche à la lumière et une position qui ouvre l'ouverture de chargement (72).

24. Cassette selon la revendication 23, **caractérisée en ce que** le clapet de fermeture (70) peut pivoter autour d'un axe (164) transversal aux rails de guidage (74, 76).

25. Cassette selon la revendication 23 ou 24, **caractérisée par** une mécanique d'actionnement (174-178) pour le clapet de fermeture (70), laquelle présente une partie d'entrée (174) accessible de l'extérieur de la cassette (62).

26. Cassette selon la revendication 25, **caractérisée en ce que** la partie d'entrée (174) peut coulisser parallèlement aux rails de guidage (74, 76) et sa surface d'extrémité se situe du côté de la cassette pouvant être fermé par le clapet de fermeture (70).

27. Cassette selon la revendication 26, **caractérisée en ce que** la partie d'entrée (174) présente une surface de commande (176) qui collabore avec une partie suivante (178) reliée au clapet de fermeture (70).

28. Cassette selon une des revendications 20 à 27, **caractérisée en ce que** le clapet de fermeture (70) présente au moins une nervure d'étanchéité (166, 167, 168) qui peut être introduite dans une rainure d'étanchéité (170, 171, 172) alignée d'une paroi de cassette (64, 66).

29. Dispositif pour réaliser un transfert d'une feuille de stockage (10) avec un dispositif de positionnement selon une des revendications 12 à 15 entre une cassette (62) selon une des revendications 20 à 28 et un appareil de lecture (200) selon une des revendications 16 à 19, **caractérisé par** un compartiment de réception (84) pour une cassette (62), une mécanique d'actionnement (174-178, 184, 186) pour son clapet de fermeture (70), qui travaille lors de l'introduction de la cassette (62) dans le compartiment de réception (84), et par un préhenseur (234, 236) qui peut entrer dans l'ouverture de chargement (72) de la cassette (62) et en sortir et agir sur une feuille de stockage (10).

30. Dispositif selon la revendication 29, **caractérisé en ce que** le préhenseur (234, 236) présente une barre de préhension (236) qui peut collaborer en traction et en compression avec une baguette profilée (50) de la feuille de stockage (10).

31. Dispositif selon la revendication 30, **caractérisé en ce que** la barre de préhension (236) est réalisée sous la forme d'un profilé en équerre qui présente une portion en crochet (238) qui peut s'engager dans la baguette profilée (50).

32. Dispositif selon la revendication 31, **caractérisé en ce que** la barre de préhension (236) est disposée sur une barre porteuse (234) qui peut pivoter autour d'un axe (260) perpendiculaire aux rails de guidage (70, 74 ; 230, 232), parallèle au plan de la feuille.

33. Dispositif selon une des revendications 29 à 32, **caractérisé en ce que** le préhenseur (236) est porté par un bras d'entraînement (242) qui peut tourner autour de l'axe de la tête de lecture (210).

34. Dispositif selon la revendication 33, **caractérisé en ce que** le préhenseur (236) est relié à un suiveur de came (252) qui collabore avec une surface de came (254) fixe dans l'espace de façon que le préhenseur (234, 236) se déplace au voisinage de l'ouverture de chargement (72) de la cassette (62) essentiellement parallèlement aux rails de guidage (74, 76) de la cassette (62).

35. Dispositif selon une des revendications 29 à 33, **caractérisé par** au moins un corps de recouvrement (94, 96, 98) qui peut fermer une chambre de réception de cassette (86) du compartiment de réception (84) quand aucune cassette (62) ne s'y trouve.

36. Dispositif selon la revendication 35, **caractérisé en ce qu'**il présente plusieurs corps de recouvrement (94, 96, 98) juxtaposés, pouvant être actionnés indépendamment, qui peuvent chacun être déplacés par un levier de manoeuvre associé (148) qui peut être entraîné par une cassette (62) insérée, les corps de recouvrement (94, 96, 98) pouvant, ensemble, fermer complètement la chambre de réception de cassette (86) et, en cas d'utilisation de cassettes de taille différente, fermer les régions de la chambre de réception de cassette (86) non remplies par les cassettes.

37. Dispositif selon la revendication 36, **caractérisé en ce que** les différents corps de recouvrement (94, 96, 98) présentent des alésages de palier qui s'étendent sur un axe de palier commun (144).

38. Dispositif selon une des revendications 35 à 37, **caractérisé en ce que** les corps de recouvrement (94, 96, 98) peuvent être introduits par une portion d'extrémité libre dans un évidement (138) qui est formé dans une paroi (134) du compartiment de réception (84).

39. Dispositif selon une des revendications 36 à 38, **caractérisé par** chaque fois un verrou (156) pour verrouiller un corps de recouvrement associé (94, 96, 98) dans sa position de fermeture, le verrou étant relié par un dispositif de liaison (154) respectif au levier de manoeuvre (148) du corps de recouvrement (94, 96, 98) considéré.

40. Dispositif selon une des revendications 36 à 39, **caractérisé en ce que** le levier de manoeuvre (148) est relié à un volet de recouvrement (152) qui, dans la position de fermeture du corps de recouvrement (94, 96, 98) prise en cas d'absence d'une cassette (62), ferme une ouverture (150) d'une paroi de compartiment (136) à travers laquelle le levier de manoeuvre (148) est passé.

41. Dispositif selon une des revendications 36 à 40, **caractérisé en ce que** les corps de recouvrement (94, 96, 98) présentent des flasques de recouvrement latéraux (95) avec lesquels ils peuvent recouvrir un corps de recouvrement voisin ou un bord d'une paroi (136) du compartiment de réception (84) qui reçoit les corps de recouvrement (94, 96, 98).

42. Dispositif selon une des revendications 29 à 41, **caractérisé en ce qu'**il est prévu au moins une butée (184) fixe dans la direction de déplacement de la cassette (62), laquelle collabore dans la dernière phase du mouvement d'insertion de la cassette (62) avec une partie d'entrée (174) de la mécanique d'actionnement de clapet de fermeture (174-178), ladite butée (184) pouvant être déplacée entre une position de travail alignée avec la partie d'entrée (174) de la mécanique d'actionnement (170-178) et une position de repos (186) éloignée de cette dernière.

43. Dispositif selon la revendication 42, **caractérisé en ce que** la tige de butée (184) est portée par un volet pivotant (186) qui, en cas d'absence d'une cassette (62), se trouve dans une direction oblique par rapport au plan de la cassette.

44. Dispositif selon la revendication 43, **caractérisé en ce que** le bord libre du volet (186) éloigné de l'axe de pivotement (188) est étagé.

45. Dispositif selon une des revendications 29 à 44, **caractérisé en ce qu'**une paroi (136) du compartiment de réception (84) présente des fenêtres de passage (103) à travers lesquelles des éléments de poussée (100) peuvent collaborer avec des moyens d'entraînement (78, 80) de la cassette (62).

46. Dispositif selon la revendication 44, **caractérisé en ce que** les éléments de poussée (100) sont formés par des pièces en matériau flexible qui sont guidées dans une fente de guidage (101).

47. Dispositif selon la revendication 46, **caractérisé en ce que** les éléments de poussée (100) sont portés par une barre de poussée allongée (102) qui peut être déplacée dans la direction d'insertion de la cassette.

48. Dispositif selon la revendication 47, **caractérisé en ce que** la barre de poussée (102) est déplacée par au moins un entraînement à vis (108) d'un moteur (114).

49. Dispositif selon la revendication 48, **caractérisé en ce que** la barre de poussée (102) est déplacée par deux entraînements à vis (108) espacés qui sont couplés par une courroie d'entraînement (110).

50. Dispositif selon une des revendications 29 à 49, **caractérisé en ce que** le compartiment de réception (84) présente une butée de fin de course (118) pour la position complètement insérée de la cassette (62), par laquelle une feuille de stockage (10) peut passer.

51. Dispositif selon la revendication 50 en liaison avec la revendication 42, **caractérisé en ce que** le compartiment de réception présente une butée supplémentaire (132) qui peut être déplacée entre une position de travail dans laquelle elle se trouve devant la butée de fin de course (118) et arrête la cassette (62) à un point auquel la mécanique d'actionnement (170-178) pour le clapet de fermeture (70) de la cassette (62) n'a pas encore travaillé, et une position de repos située derrière la butée de fin de course.

52. Dispositif selon la revendication 51, **caractérisé en ce que** la butée supplémentaire (132) est couplée (130, 133) à des moyens de poussée (100) qui travaillent sur la cassette (62).

53. Dispositif selon une des revendications 29 à 52, **caractérisé en ce que** des pièces de jonction (240) sont disposées entre les rails de guidage (230, 232) du dispositif de serrage de feuille (218) et les rails de guidage (74, 76) d'une cassette (62) se trouvant dans le compartiment de réception (84).

54. Dispositif selon la revendication 53, **caractérisé en ce que** les pièces de jonction de guidage (240) sont réduites côté cassette à leur flasque de support, de sorte que les pièces de jonction ont une forme de fourche.

55. Dispositif selon une des revendications 29 à 54, **caractérisé en ce qu'**il présente deux compartiments de réception (84-1, 84-2) juxtaposés en alignement, à chacun desquels est associé un préhenseur (234, 236) qui peut être déplacé indépendamment de l'autre préhenseur.

56. Dispositif selon la revendication 55, **caractérisé en ce que** la tête de lecture (210) est essentiellement alignée dans son extension axiale avec un premier (84-1) des compartiments de réception (84-1, 84-2), tandis qu'un dispositif d'effacement de feuille (258) est prévu dans une chambre alignée axialement avec le deuxième compartiment de réception (84-2).

57. Dispositif selon la revendication 56, **caractérisé en ce qu'**une barrière (260) opaque à la lumière d'effacement est prévue entre le dispositif d'effacement de feuille (258) et la tête de lecture (210), laquelle peut être formée par exemple par un obturateur ou un filtre approprié.

58. Dispositif selon la revendication 57, **caractérisé en ce que** la barrière est aussi opaque à la lumière de fluorescence.

59. Dispositif selon une des revendications 29 à 58, **caractérisé en ce qu'**un entraînement (268) pour générer un mouvement supplémentaire du préhenseur (234, 236) dans une direction inclinée, en particulier inclinée perpendiculairement par rapport à la direction des rails de guidage (74, 76 ; 230, 231, 232), est prévu.

60. Dispositif selon une des revendications 29 à 59, **caractérisé en ce qu'**au niveau des rails de guidage (230, 231, 232) de l'appareil de lecture (200), il est prévu au moins une paroi de recouvrement adaptée à la géométrie des rails de guidage (230, 231, 232), laquelle recouvre les régions non occupées par une feuille de stockage.

61. Dispositif selon une des revendications 29 à 60, **caractérisée par** une lampe d'effacement en forme de barreau qui est disposée au voisinage de l'extrémité du compartiment de réception (84) tournée vers l'appareil de lecture (200).
